# EUROPEAN PATENT APPLICATION

(11) **EP 4 084 111 A1**
(43) Date of publication of application: **02.11.2022**
(21) Application number: 20906477.3
(22) Date of filing: 25.12.2020
(51) Int. Cl.: H01M 4/04, H01M 4/13, H01M 4/139, H01M 4/62, H01G 11/06, H01G 11/28, H01G 11/30, H01G 11/50, H01G 11/86, H01M 10/052, H01M 10/054, H01M 10/36

(54) **METHOD FOR MANUFACTURING OR RECYCLING MEMBER FOR ELECTROCHEMICAL DEVICE, METHOD FOR MANUFACTURING ELECTROCHEMICAL DEVICE, MEMBER FOR ELECTROCHEMICAL DEVICE, AND ELECTROCHEMICAL DEVICE**

(30) Priority: 27.12.2019 JP 2019239432
(71) Applicant: Zeon Corporation, Tokyo 100-8246 (JP)
(72) Inventor: YONEMARU, Hiroyuki, Tokyo 100-8246 (JP)
(74) Representative: Hansen, Norbert
(86) International application number: PCT/JP2020/049007
(87) International publication number: WO 2021/132675

(57) **Abstract**

A purpose of the present invention is to provide a method for manufacturing, etc., a member for an electrochemical device in which the problem of irreversible change in the composition of the electrochemical device due to solvent depletion, moisture absorption, etc., during manufacturing of the electrochemical devices is unlikely to occur. This method for manufacturing a member for an electrochemical device includes performing at least one shaping operation described in the present specification on a shaping material composition that comprises: at least one filler (F); a plasticizer (P-S), being water, an ionic liquid, or a mixture thereof; and a polymer (PI), the shaping material composition being substantially free of an organic solvent and having plasticity and self-supporting property.

## Description

### TECHNICAL FIELD

The present disclosure relates to a method for manufacturing or recycling a member for an electrochemical device, a method for manufacturing an electrochemical device, a member for an electrochemical device, and an electrochemical device.

### BACKGROUND

Electrodes that comprise active materials have heretofore been used in electrochemical devices, including primary batteries such as lithium primary batteries; non-aqueous secondary batteries such as lithium ion secondary batteries, lithium metal secondary batteries, sodium ion secondary batteries, potassium ion secondary batteries, magnesium secondary batteries, and aluminum secondary batteries; air batteries; solar batteries such as dye-sensitized solar batteries; capacitors such as electric double layer capacitors and lithium ion capacitors; electrochromic display devices; electrochemical luminescent devices; electric double layer transistors; and electrochemical actuators.

For example, PTL 1 is aimed at providing an electrode paste in which the contact surface area of the active material particles with solution is made uniform. PTL states that the electrode paste is produced using chemically dried materials. Specifically, an active material solid particle component is mixed with a liquid nonvolatile plasticizer component and a volatile anhydrous pulverization solvent to form a slurry, the slurry is subjected to pulverization until the particle size and the particle size distribution reach desired values, and the volatile anhydrous pulverization solvent is removed to produce the electrode paste.

PTL 2 describes a method for manufacturing a positive electrode plate for a nonaqueous battery by applying onto an electrode plate core body a paste that mainly comprises an active material such as manganese dioxide in powder form, a fluororesin binder that is fiberized in a green state to form a binding net, and a solution of a viscous agent made of polyethylene oxide, followed by heat treatment of the paste at temperatures lower than or equal to the decomposition temperature of the polyethylene oxide to remove water.

PTL 3 discloses an electrolyte composition for an electrochemical device that comprises an ionic substance and a plasticizer consisting of an organic compound containing an organic compound with a high boiling point; an electrode for an electrochemical device that comprises an electrode mixed material layer obtained by shaping a mixture obtained by mixing the electrolyte composition with an electrode active material; and methods for manufacturing the electrolyte composition and the electrochemical device.

### CITATION LIST

### Patent Literature

PTL 1: JPH10-334886A
PTL 2: JPS61-91861A
PTL 3: JP2019-114390A

### SUMMARY

### (Technical Problem)

The techniques described in PTLs 1 to 3 are directed to apply a material to be shaped (paste, slurry, compound), obtained by kneading an active material with an electrolytic solution, onto a current collector or shape the material on the current collector to manufacture an electrode so that all the nonaqueous organic solvent in the electrolytic solution is not volatilized. In such manufacturing methods, however, when the non-aqueous organic solvent has been volatilized more than necessary in cases where the shaping process is exposed to an open-air environment, it is difficult to replenish organic solvent for compensation. Further, when moisture absorption has occurred, it is difficult to remove the absorbed moisture. As such, it is difficult in these manufacturing methods to recover the quality that has been once changed, and therefore, they have the problem of having to manage the amount of the organic solvent volatilized in order to ensure stable production and statable device performance. These manufacturing methods also have the problem of causing a risk that operators will be exposed to volatilized non-aqueous organic solvents if no appropriate management is performed during electrode manufacturing.

PTL 2 studies the disclosed technique for its applicability to the manufacture of a positive electrode for a lithium primary battery, but not for its applicability to the manufacture of members used in other batteries such as lithium ion secondary batteries. In addition, PTL 2 fails to study changes in the quality of a member associated with variations in the solvent amount during the manufacturing process and quality recovery. While the accuracy of the basis weight of the electrode (e.g., accuracy in the electrode thickness, electrode surface roughness) is particularly important in secondary batteries compared to primary batteries, the technique described in PTL 2 fails to study the accuracy of the basis weight of the electrode. In addition, PTL 2 fails to disclose forming a member by a shaping operation.

Accordingly, it would be helpful to provide a method for manufacturing a member for an electrochemical device in which the problem of irreversible changes in the electrochemical device composition due to solvent reduction, moisture absorption, etc. during manufacture of the electrochemical device is unlikely to occur; and so forth.

### (Solution to Problem)

As a result of extensive studies to achieve the above-described object, the inventor has established that a member for an electrochemical device can be manufactured in which irreversible changes in quality during manufacturing process are reduced, by performing a predetermined shaping operation to a shaping material composition that comprises a filler, a plasticizer which is water, an ionic liquid or a mixture thereof, and a polymer, the shaping material composition being substantially free of an organic solvent, having plasticity and self-supporting property, with the polymer plasticized by the plasticizer. The inventor thus completed the present disclosure.

Specifically, the present disclosure aims at advantageously solving the problem set forth above, and the disclosed method for manufacturing a member for an electrochemical device comprises performing at least one shaping operation selected from the following Group A on a shaping material composition that comprises:
at least one filler (F);
a plasticizer (P-S), being water, an ionic liquid, or a mixture thereof; and
a polymer (PI),
the shaping material composition being substantially free of an organic solvent and having plasticity and self-supporting property,
Group A: extrusion, injection into a mold, stretching, compression molding, thickness reduction by pressurizing, thickness uniformization by pressurizing, cutting, hole boring, shaving, bending into a final shape for housing in an electrochemical device container, and lamination of shaping material compositions having different compositions.

When an electrochemical device (e.g., an electrode) is manufactured using the member for an electrochemical device thus manufactured, it is possible to reduce irreversible changes in the electrochemical device composition due to solvent reduction, moisture absorption etc. at the time of manufacturing the electrochemical device.

The polymer (PI) may be a polymer also capable of being plasticized by an electrolytic solution solvent (E-S). The polymer (PI) may be a deliquescent polymer. Preferably, the polymer (PI) is a polymer containing ethylene oxide (EO) as a monomer unit, a polyoxazoline-based polymer, a poly-N-vinylacetamide-based polymer, or an epichlorohydrin-organic amine condensate.

The filler (F) may comprise an active material (A). The filler (F) may comprise an inorganic solid electrolyte. The filler (F) may comprise a fibrous material. The filler (F) may comprise a solid lubricant.

The fibrous material may have a fiber length of 10 µm or more. The fibrous material may have a fiber length that is equal to or larger than the thickness of the member for an electrochemical device. The fibrous material may have a nanosized fiber diameter.

The solid lubricant may be selected from the following Group B: Group B: graphite, graphene, boron nitride, polytetrafluoroethylene (PTFE), perfluoroalkoxyalkane (PFA), molybdenum sulfide, tungsten disulfide, mica, talc, graphite fluoride, melamine cyanurate, and metallic soap.

The filler (F) may be nanosized. The volume fraction occupied by the filler (F) in the shaping material composition may be 50% by volume or more.

The shaping material composition may further comprise a polymer (P2) capable of being plasticized by the plasticizer (P-S) and insoluble in an electrolytic solution.

The disclosed method for manufacturing a member for an electrochemical device may comprise irreversibly crosslinking the polymer (PI). The crosslinking may be thermal crosslinking. The crosslinking may be UV crosslinking. A crosslinking agent may be added to the shaping material composition. A crosslinking agent may be added in the electrolytic solution. The polymer (PI) may be a self-crosslinkable polymer.

The disclosed method for manufacturing a member for an electrochemical device may comprise controlling and feeding back a basis weight by measuring the thickness of a member. The disclosed method for manufacturing a member for an electrochemical device may comprise compressing a plurality of strands consisting of a shaping material composition to form a sheet. The disclosed method for manufacturing a member for an electrochemical device may comprise obtaining a member by scraping from a lump of a shaping material composition.

The disclosed method for manufacturing a member for an electrochemical device may comprise bonding the shaping material composition to a substrate. The disclosed method for manufacturing a member for an electrochemical device may comprise shaping the shaping material composition to a desired thickness and then bonding the shaping material composition to the substrate. The disclosed method for manufacturing a member for an electrochemical device may comprise bonding the shaping material composition substantially simultaneously from front and back sides of the substrate. The disclosed method for manufacturing a member for an electrochemical device may comprise bonding the shaping material composition to a front side of the substrate and then to a back side of the substrate. The substrate may have a conductive coating on a surface in contact with the shaping material composition. The substrate may comprise a polymer as a main component. In the disclosed method for manufacturing a member for an electrochemical device, the member may not be cut or bored together with the substrate after the shaping material composition is bonded to the substrate.

The member may be an electrode or an insulating layer.

At least one shaping operation selected from Group A may be performed in a state in which the shaping material composition is not in contact with a current collector foil. At least one shaping operation selected from Group A may be performed in a state in which the shaping material composition is not in contact with a porous separator membrane.

When the plasticizer (P-S) is water or a mixture of water and ionic liquid, the disclosed method for manufacturing a member for an electrochemical device may comprise shaping the shaping material composition into a final shape for placing the member in a device and then removing moisture by a drying operation to allow the shaping material composition to become in a non-plasticized state. The drying operation may be performed by vacuuming or heating. The drying operation may be performed in a state in which the shaping material composition is not in contact with a current collector foil. The drying operation may be performed in a state in which the shaping material composition is not in contact with a porous separator membrane.

The disclosed method for manufacturing a member for an electrochemical device may comprise removing from a substrate the shaping material composition already bonded to the substrate. The disclosed method for manufacturing a member for an electrochemical device may comprise recovering a plasticized state by performing hydration or humidification again after the shaping material composition or the shaping material composition subjected to a crosslinking operation has become a non-plasticized state. The disclosed method for manufacturing a member for an electrochemical device may comprise manufacturing a next member again using an off-cut of a shaping material composition generated in the process of shaping the shaping material composition.

The disclosed method for recycling a member for an electrochemical device comprises removing from a substrate a shaping material composition already bonded to the substrate in the above-described method for manufacturing a member for an electrochemical device. In another embodiment, the disclosed recycling method comprises recovering a plasticized state by performing hydration or humidification again after the shaping material composition has become a non-plasticized state in the above-described method for manufacturing a member for an electrochemical device. In another embodiment, the disclosed recycling method comprises manufacturing a next member again using an off-cut of a shaping material composition generated in a process of shaping the shaping material composition in the above-described method for manufacturing a member for an electrochemical device

Because the shaping material composition used in the present disclosure can reduce irreversible changes in the electrochemical device composition due to solvent reduction, moisture absorption, etc. at the time of manufacturing an electrochemical device, the member for an electrochemical device can be recycled without changing its quality.

The disclosed method for manufacturing an electrochemical device comprises obtaining a member in the above-described manufacturing method or recycling method.

In the disclosed method for manufacturing an electrochemical device, the polymer (PI) may be a polymer also capable of being plasticized by an electrolytic solution solvent (E-S). In the disclosed method for manufacturing an electrochemical device, the shaping material composition may further comprise a polymer (P2) capable of being plasticized by the plasticizer (P-S) and insoluble in an electrolytic solution. In the disclosed method for manufacturing an electrochemical device, a crosslinking agent may be added in an electrolytic solution.

The disclosed member for an electrochemical device is obtainable by the above-described manufacturing method or recycling method. The member for an electrochemical device may be an electrode or an insulating layer.

The disclosed electrochemical device comprises the above-described member for an electrochemical device.

The disclosed electrochemical device may comprise an electrode obtained by the above-described manufacturing method or recycling method, and a counter electrode for the electrode. The counter electrode may comprise at least one selected from an alkali metal, an alkaline earth metal, metallic aluminum, and silver.

The disclosed electrochemical device may be a water-containing electrochemical device comprising as a carrier ion at least any of an alkali metal ion, an alkaline earth metal ion, an aluminum ion, a silver ion, an organic nitrogen cation, a halide anion, a bis(fluoromethanesulfonyl)imide bis (trifluoromethanesulfonyl)imide anion, and a trifluoromethanesulfonic acid anion. Examples of water-containing electrochemical devices include electrochemical devices containing water in the electrolytic solution (e.g., water-containing batteries such as water-containing lithium ion secondary batteries, and manganese zinc primary batteries).

The disclosed electrochemical device may be a non-aqueous electrochemical device. The disclosed electrochemical device may be a nonaqueous electrochemical device that comprises as a carrier ion at least any of an alkali metal ion, an alkaline earth metal ion, an aluminum ion, a silver ion, an organic nitrogen cation, a halide anion, a bis(fluoromethanesulfonyl)imide bis(trifluoromethanesulfonyl)imide anion, and a trifluoromethanesulfonic acid anion. Examples of nonaqueous electrochemical devices include electrochemical devices that comprise an electrolytic solution in organic solvent and does not comprise water (e.g., nonaqueous batteries such as nonaqueous lithium ion secondary batteries, lithium primary batteries, and manganese lithium primary batteries).

### (Advantageous Effect)

According to the present disclosure, it is possible to provide methods for manufacturing or recycling a member for an electrochemical device in which the problem of irreversible changes in the electrochemical device composition due to solvent reduction, moisture absorption, etc. during manufacture of the electrochemical device is unlikely to occur.

According to the present disclosure, it is also possible to provide a member for an electrochemical device in which the problem of irreversible changes in the electrochemical device composition due to solvent reduction, moisture absorption, etc. during manufacture of an electrochemical device is unlikely to occur; and an electrochemical device that comprises the member for an electrochemical device.

### DETAILED DESCRIPTION

The disclosed methods for manufacturing or recycling a member for an electrochemical device can be used for manufacturing or recycling a member used in any electrochemical devices, including non-aqueous or water-containing primary batteries such as lithium primary batteries, manganese primary batteries (e.g., manganese zinc primary batteries, manganese lithium primary batteries); non-aqueous or water-containing secondary batteries such as lithium ion secondary batteries (non-aqueous, water-containing), lithium metal secondary batteries, sodium ion secondary batteries, potassium ion secondary batteries, magnesium secondary batteries, and aluminum secondary batteries; air batteries; solar batteries such as dye-sensitized solar batteries; capacitors such as electric double layer capacitors, lithium ion capacitors; electrochromic display devices; electrochemical light emitting devices; electric double layer transistors; and electrochemical actuators.

The disclosed member for an electrochemical device may be manufactured or recycled by the disclosed method for manufacturing or recycling a member for an electrochemical device.

The disclosed electrochemical device may comprise the disclosed member for an electrochemical device.

The electrochemical device is preferably a nonaqueous secondary battery, and more preferably a lithium ion secondary battery.

### (Method for manufacturing member for electrochemical device)

The disclosed method for manufacturing a member for an electrochemical device comprises performing at least one shaping operation selected from Group A given below on a shaping material composition that comprises:
at least one filler (F);
a plasticizer (P-S), being water, an ionic liquid, or a mixture thereof; and
a polymer (PI),
the shaping material composition being substantially free of an organic solvent and having plasticity and self-supporting property. Preferably, the polymer (PI) may be plasticized by the plasticizer (P-S).
Group A: extrusion, injection into a mold, stretching, compression molding, thickness reduction by pressurizing, thickness uniformization by pressurizing, cutting, hole boring, shaving, bending into a final shape for housing in an electrochemical device container, and lamination of shaping material compositions having different compositions.

### <Shaping material composition>

The "shaping material composition" refers to a semi-solid material for forming a member for an electrochemical device. The shaping material composition can be obtained by mixing the at least one filler (F), the plasticizer (P-S) and the polymer (PI) described above, optionally with additional component(s), under conditions substantially free of organic solvent. These components may be mixed at the same time or sequentially; the order in which the components are added is not limited. The mixing operation may be effected with a batch mixer, a continuous mixer, or both. The polymer may be added as a powder or as a solution in which the polymer is dissolved in solvent. It is preferred that powdery materials are mixed first to ensure that the components are dispersed uniformly. Any mixing operation can be employed. Mixing can be effected using mixers known in the art, such as multi-screw extruders, bead mills, roll kneaders, closed-type kneading devices (e.g., kneaders, Banbury mixers, planetary mixers.), high-speed stirring mixers (e.g., HENSCHEL MIXER, coffee mills), rolling granulators, and fluidized bed granulators. The operating temperature for mixing is preferably equal to or lower than the melting point of the polymer (PI) and is usually preferably room temperature or lower (35°C or lower). The operating temperature of mixing is preferably equal to or higher than the freezing point of the plasticizer (P-S) and is usually preferably 0°C or higher. When the shaping material composition is a powder, there is an increased risk that the fine powder enters the inside of an electrochemical device (e.g., battery) or the inside of a manufacturing apparatus, so that the shaping material composition of the present disclosure is handled in the form of clay (compound).

The shaping material composition used in the present disclosure has plasticity and self-supporting property. As used herein, the shaping material composition "has plasticity" means that a lump of the shaping material composition, even after divided into two or more portions, can be merged into one lump under conditions of 25°C. As used herein, the term "has self-supporting" means that a material has resistance to deformation and collapse due to its own weight thus maintains its shape when the material is allowed to stand and when the material is moved in air; that is, when the material is allowed to stand for a long time, the material can maintain its shape without being affected by its own weight etc. and can move in air with its shape maintained. Specifically, "has self-supporting" means that, under conditions of 25°C, a material can be at least shaped into a sheet with dimensions of 10 mm×10 mm×2 mm, the sheet does not flow and the shape does not change for at least one hour when placed onto a flat table, and the sheet can be gripped and lifted with tweezers having an area of 1/10 cm² or less from the edge of the sheet. It can be said that the sheet has better self-supporting property when it can be lifted with larger area and smaller thickness.

### <Filler (F)>

The filler (F) refers to a solid material that forms the member for an electrochemical device. The filler (F) is usually particulate or powder form. The filler (F) may preferably be a solid material having a minor diameter at least smaller than the member's thickness. Examples of the filler (F) include an active material (A), inorganic solid electrolytes, fibrous materials, solid lubricants, conductive materials (e.g., conductive carbon), reinforcing materials, output improvers, flame retardants, gas generators, resistance enhancing plastic particles, and other simple fillers having no particular function. These classes of the filler (F) are based on functional, use, physical properties etc., and the same material may belong to two or more of these classes.

When the filler is particulate, it is preferred to reduce the particle diameter because the specific surface area increases and hence the cohesive force becomes strong. Preferred as the filler (F) are nanosized (maximum diameter is less than 1 µm) fillers, with fillers having a volume average particle diameter of 100 nm or more and 900 nm or less being more preferred. The use of a nanosized filler results in an increased contact interface area with the electrolyte, so that a member (e.g., an electrode) excellent in strength can be formed and a member (e.g., an electrode) capable of favorably proceeding the electrochemical reaction can be formed. The diameter of the filler is preferably less than the thickness of the member itself. Even if the major diameter is greater than the thickness of the member itself, when the minor diameter is less than the thickness of the member, the filler can be used because it is laterally oriented.

The volume average particle diameter of the particulate filler herein can be measured in accordance with JIS K8825.

The content of the filler (F) in the shaping material composition is preferably 50% by volume or more, more preferably 60% by volume or more. When the content of the active material (A) is equal to or higher than the above-mentioned lower limit value, a member (e.g., electrode) can be formed with which an electrochemical device having a high function (e.g., high capacity) can be fabricated.

When crosslinking of the shaping material composition is not performed, higher solid contents in the member (e.g., electrode, separator) are preferred because self-supporting property improves. The solid content in the shaping material composition is preferably 40vol% or more, 50vol% or more, 60vol% or more, and 70vol% or more. The solid content in the shaping material composition is preferably 80vol% or less because plasticity decreases when it exceeds 80vol%. When the device is a power storage element, it is preferred that the active material density is higher also from the viewpoint of energy density.

### <Active material (A)>

The active material (A) is not particularly limited and any active material can be used depending on the type of the electrochemical device. The active material (A) included in the shaping material composition may be composed of only one type of active materials or may be a mixture of two or more kinds of active materials.

Examples of the active material (A) include electrode active materials (when the member for an electrochemical device is an electrode).

### <Electrode active material>

When the member for an electrochemical device is an electrode, the electrode comprises an electrode active material as the active material (A). As the electrode active material, an electrode active material corresponding to the type of an electrochemical device that comprises an electrode to be manufactured can be used. For example, in the case where the electrochemical device is a battery (e.g., a non-aqueous or water-containing secondary battery such as a lithium ion secondary battery (non-aqueous or water-containing), a non-aqueous or water-containing primary battery such as a lithium primary battery, a manganese primary battery (a manganese zinc primary battery, a manganese lithium primary battery)), the electrode active materials described below can be used without any particular limitation.

### <Positive electrode active material>

Examples of positive electrode active materials to be incorporated in the positive electrode mixed material layer of the positive electrode of a battery (e.g., a non-aqueous or water-containing secondary battery such as a lithium ion secondary battery (non-aqueous or water-containing), a non-aqueous or water-containing primary battery such as a lithium primary battery, a manganese primary battery (a manganese zinc primary battery, a manganese lithium primary battery)) include compounds having a transition metal, e.g., transition metal oxides, transition metal sulfides, composite metal oxides of lithium and transition metals, elemental sulfur, and oxidation-reduction active organic compounds. Examples of transition metals include Ti, V, Cr, Mn, Fe, Co, Ni, Cu, and Mo.

Specifically, the positive electrode active material is not particularly limited and examples thereof include lithium-containing cobalt oxide (LiCoO₂), lithium manganate (LiMn₂O₄), lithium-containing nickel oxide (LiNiO₂), lithium-containing composite oxide of Co-Ni-Mn, lithium-containing composite oxide of Ni-Mn-Al, lithium-containing composite oxide of Ni-CoAl, olivine-type lithium iron phosphate (LiFePO₄), olivine-type lithium manganese phosphate (LiMnPO₄), lithium-excess spinel compound represented by Li_{1+z}Mn₂₋ₓO₄ (0<X<2), Li[Ni_{0.17}Li_{0.2}Co_{0.07}Mn_{0.56}]O₂, LiNi_{0.5}Mn_{1.5}O₄, MOFs (Metal-Organic-Frameworks), benzoquinone, and manganese dioxide.

The positive electrode active materials described above may be used alone or in combination.

### <Negative electrode active material>

Examples of negative electrode active materials to be incorporated in the negative electrode mixed material layer of the negative electrode of a battery (e.g., a non-aqueous or water-containing secondary battery such as a lithium ion secondary battery (non-aqueous or water-containing), a non-aqueous or water-containing primary battery such as a lithium primary battery, a manganese primary battery (a manganese zinc primary battery, a manganese lithium primary battery)) include carbon-based negative electrode active materials, metal-based negative electrode active materials, and negative electrode active materials in which the foregoing negative electrode active materials are combined.

Herein, "carbon-based negative electrode active material" refers to an active material having a main framework of carbon into which lithium can be intercalated (or "doped"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon; and graphitic materials such as natural graphite and artificial graphite.

The metal-based negative electrode active material is an active material that contains metal, the structure of which usually contains an element that allows insertion of lithium, and that exhibits a theoretical electric capacity per unit mass of 500 mAh/g or more when lithium is inserted. Then, as the metal-based active material, for example, a lithium metal, a single metal capable of forming a lithium alloy (e.g., Ag, Al, Ba, Bi, Cu, Ga, Ge, In, Mg, Ni, P, Pb, Sb, Si, Sn, Sr, Zn, Ti, etc.) and their oxides, sulfides, nitrides, silicides, carbides, phosphides, oxalates, formates, and the like. Moreover, oxides such as lithium titanate can be used.

The negative electrode active materials described above may be used alone or in combination.

### <Filler for insulating layer>

When the member for the electrochemical device is an insulating member, e.g., a separator, the insulating member may include a filler for an insulating layer. As the filler for an insulating layer, it is possible to use a filler for an insulating layer according to the type of the electrochemical device in which the insulating layer to be manufactured is used. The filler for an insulating layer can be freely selected from materials other than electrically conductive materials, e.g., one or more of simple fillers, solid electrolytes, fibrous materials, solid lubricants, reinforcing materials, power enhancing agents, flame retardants, gas generators, resistance enhancing plastics, and the like may be selected in combination. It is preferred to include at least one material having high heat resistance. A conductive material may be included as long as the insulating layer does not exhibit conductivity. For example, in the case where the electrochemical device is a lithium ion secondary battery, the filler for an insulating layer is not particularly limited as long as it is not a conductive material. Examples include particles made of an inorganic material (i.e., non-conductive inorganic particles) and particles made of an organic material (i.e., non-conductive organic particles) that stably exist and are electrochemically stable under the use environment of the electrochemical device. Non-conductive inorganic particles are preferred. Preferred examples of non-conductive inorganic particles include simple fillers other than those having electrical conductivity (conductive materials).

### <Solid electrolyte>

From the viewpoint of expected improvement in ion conductivity, the shaping material composition may include an inorganic solid electrolyte as the filler (F). The inorganic solid electrolyte may be, for example, an ion conductive ceramic. Examples of inorganic solid electrolyte include lithium ion conductors such as Li-Ge-P-S system conductors (e.g., Li₁₀GeP₂S₁₂), Li-Si-P-S-Cl system conductors (e.g., Li_{9.54}Si_{1.74}P_{1.44}S_{11.7}Cl_{10.3}), Li-La-Zr-O system conductors (e.g., L₁₇La₃Zr₂O₁₂); β-alumina (sodium ion conductor); copper ion conductors such as Rb-Cu-I-C system conductors (e.g., RbCu₄I_{1.75}C_{13.25}); and silver ion conductors such as Ag-I-W-O system conductors (e.g., Ag₆I₄WO₄).

### <Fibrous material>

The shaping material composition may further comprise a fibrous material as the filler (F) because when a fibrous material is included, it bridges between fillers such as inorganic particles to increase the cohesiveness of the shaping material composition to provide an effect of improving the strength of the member for an electrochemical device (e.g., electrode). Preferred fibrous materials are those having an aspect ratio of 100 or more, having a fiber diameter that is at least equal to or less than the thickness of the member. Examples of fibrous materials include carbon, metal, plastic, natural polymer, and ceramic fibers. Of these, nanofibers having a fiber diameter of 1 µm or less are preferred, and nanofibers having a maximum diameter of less than 1 µm are preferred. Examples of nanofibers having such a fiber diameter include carbon nanotubes (CNTs), carbon nanofibers, cellulose nanofibers, polytetrafluoroethylene (PTFE), and ceramic nanofibers. The fiber length of the fibrous material is not particularly limited and may be 10 µm or more, preferably 20 µm or more, and more preferably 50 µm or more from the viewpoint of bonding fillers together, and may be, for example, 5 cm or less, preferably 1 cm or less, and more preferably 1 mm or less from the viewpoint of handling property of the raw material. In addition, the fiber length of the fibrous material is preferably equal to or larger than the thickness of the member for an electrochemical device (e.g., electrode) from the viewpoint of improving the tensile strength by allowing the fibers to orient in the plane direction.

Because the electrode density becomes too low if the fibrous material is added too much, the amount of the fibrous material may be preferably 8 parts by weight or less, more preferably 5 parts by weight or less, and still more preferably 3 parts by weight or less, based on the total amount of the shaping material composition. Although some prior art makes an electrode using only PTFE as a binder, a large amount (10 parts by weight or more) of PTFE is required and also the density of the electrode tends to be low. In the present disclosure, the force for grouping fillers such as active materials and conductive particles is mainly provided by the adhesiveness of the plasticized polymer, the fibrous material only plays an auxiliary role. Thus, there is no need to add large amounts of fibrous material.

### <Solid lubricant>

From the viewpoint of smoothing the shaping process to process the shaping material composition with a small force, the shaping material composition may comprise a solid lubricant as the filler (F). Examples of solid lubricants include those listed in Group B below.

Group B: graphite, graphene, boron nitride, polytetrafluoroethylene (PTFE), perfluoroalkoxyalkane (PFA), molybdenum sulfide, tungsten disulfide, mica, talc, graphite fluoride, melamine cyanurate, and metallic soap.

Examples of metallic soaps include magnesium stearate, magnesium laurate, magnesium palmitate, calcium stearate, calcium oleate, calcium laurate, calcium 12-hydroxystearate, calcium montanate, barium stearate, barium oleate, barium laurate, barium arachidinate, barium behenate, zinc stearate, zinc oleate, zinc laurate, and lithium stearate.

The concentration of the solid lubricant relative to the shaping material composition is not particularly limited and may be, for example, 0.5% by weight or more, preferably 1% by weight or more, and more preferably 2% by weight or more from the viewpoint of exerting lubricity, and may be, for example, 5% by weight or less, preferably 8% by weight or less, and more preferably 10% by weight or less from the viewpoint of increasing the ratios of the active material and the insulating layer filler.

### <Conductive material>

From the viewpoint of improving the conductivity of the electrode, the shaping material composition may comprise a conductive material as the filler (F). Examples of conductive materials include conductive carbon (e.g., graphite, expanded graphite, graphene, acetylene black, Ketjen black^{®} (Ketjen black is a trademark in Japan, other countries, or both) carbon nanohorn, fullerene, CNT), and metal powder (e.g., aluminum, zinc, iron, copper, silver, gold, nickel, and titanium). The concentration of the conductive material relative to the shaping material composition is not particularly limited and may be, for example, 1% by weight or more, preferably 3% by weight or more, and more preferably 5% by weight or more from the viewpoint of exerting conductivity, and may be, for example, 25% by weight or less, preferably 20% by weight or less, and more preferably 15% by weight or less from the viewpoint of increasing the ratio of the active material.

### <Reinforcing material >

From the viewpoint of imparting reinforcing property to an electrochemical device, the shaping material composition may comprise a reinforcing material as the filler (F). Examples of reinforcing materials include whiskers having large aspect ratios.

### <Output enhancer>

From the viewpoint of improving the output of the electrochemical device, the shaping material composition may comprise an output improver as the filler (F). Examples of output improvers include fillers that impart ion dissociation assist, and fillers that impart an output to an electrochemical device. Fillers that impart ion dissociation assist includes nanofillers (e.g., silica, alumina, zirconia, titania). Fillers that impart an output to an electrochemical device include ferroelectrics such as barium titanate.

### <Flame retardant>

From the viewpoint of enhancing safety of the electrochemical device, the shaping material composition may comprise a flame retardant as the filler (F). Examples of flame retardants include red phosphorus, aluminum hydroxide, magnesium hydroxide, antimony-based flame retardants (e.g., antimony trioxide), phosphinate metal salts, cyclophosphazene oligomers, polyphosphazenes, aliphatic phosphate amidates (e.g., DAIGUARD-850, Daihachi Chemical Industry), chlorinated paraffins (e.g., EMPARA 70, Ajinomoto Fine-Techno Co., Ltd.), and melamine cyanurate. The concentration of the flame retardant relative to the shaping material composition is not particularly limited and may be, for example, 5% by weight or more, preferably 8% by weight or more, and more preferably 10% by weight or more from the viewpoint of exerting flame retardancy, and may be, for example, 25% by weight or less, preferably 20% by weight or less, and more preferably 15% by weight or less from the viewpoint of not hindering the operation of the electrochemical device.

### <Gas generator>

From the viewpoint of enhancing safety by giving an effect of increasing the electrode resistance by generating gas at the time of abnormal heat generation of the electrochemical device, the shaping material composition may include a gas generator (having an effect of increasing the electrode resistance by generating gas at the time of abnormal heat generation) as the filler (F). Examples of gas generators include melamine, melamine cyanurate, ammonium carbonate, ammonium chloride, sodium bicarbonate, and OBSH.

### <Resistance enhancing plastic particles>

The shaping material composition may comprise resistance increasing plastic particles as the filler (F) from the viewpoint of increasing safety by providing an effect of increasing the electrode resistance by the particles being molten at the time of abnormal heat generation of the electrochemical device. Examples of resistance increasing plastic particles include polyethylene and polypropylene.

### <Simple filler>

The shaping material composition may comprise a simple filler which is otherwise non-particularly functional as the filler (F). Of simple fillers, those composed of material having no electrical conductivity can be also used as a filler for an insulating layer. Examples of fillers that can be used as simple fillers and also as fillers for an insulating layer include inorganic oxide particles such as aluminum oxide (alumina, Al₂O₃), hydrate of aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, silica, alumina-silica complex oxide, etc.; nitride particles such as aluminum nitride, boron nitride, etc.; covalent crystalline particles such as silicon, diamond, etc.; poorly soluble ionic crystalline particles such as barium sulfate, calcium fluoride, barium fluoride, etc.; and clay microparticles such as talc, montmorillonite etc. From the viewpoint of improving heat resistance, preferred simple fillers are particles made of alumina (alumina particles), particles made of boehmite (boehmite particles), particles made of titania (titania particles), and particles made of barium sulfate (barium sulfate particles), with alumina particles, boehmite particles, and barium sulfate particles being more preferred, and alumina particles and barium sulfate particles being even more preferred.

Note that these particles may be subjected to element substitution, surface treatment, solid solution treatment, or the like, if necessary. One type of these particles may be used or two or more types of these particles may be used in combination.

### <Selection of filler (F)>

The filler (F) may be selected in the expectation that an effect is provided that contributes to improvements in the production efficiency or safety in the manufacture of the member for an electrochemical device; improvements in the performance or safety of the member for an electrochemical device; uniformity in quality; and the like. As a filler expected to improve ion conductivity, for example, the above-described inorganic solid electrolyte may be selected. Further, as a filler which imparts reinforcing property to the electrochemical device, the above-described reinforcing material may be selected. Further, as a filler which imparts flame retardancy to the electrochemical device, for example, the above-described flame retardant may be selected. Further, as a filler for improving the output of the electrochemical device, for example, the output improver described above (e.g., a filler for imparting ion dissociation assist, a filler for imparting an output to an electrochemical device) may be selected. Further, for example, the above-mentioned gas generator may be selected as a filler that generates a gas at the time of abnormal heat generation of the electrochemical device to give an effect of increasing the electrode resistance. The above-mentioned plastic particles may be selected, for example, as a filler that is molten when the electrochemical device generates abnormal heat to increase the electrode resistance. As the filler for improving the conductivity of the electrode, for example, the above-mentioned conductive material may be selected. Further, for example, the above-described solid lubricant may be selected as a filler having an effect of smoothing the shaping process to allow the shaping material composition to be processed with a small force.

### <Additional components>

The shaping material composition used in the present disclosure may further comprise a second polymer (P2) which is plasticized by the plasticizer (P-S) and insoluble in an electrolytic solution. In addition, the shaping material composition used in the present disclosure may further comprise other additional components. Additional components include, for example, crosslinking agents.

### <Polymer>

"Polymer" (polymer (PI), polymer (P2)) included in the shaping material composition refers to a molecule having a weight-average molecular weight of 10,000 or more. Examples of the main chain of the polymer used in the present disclosure include aromatic rings, sugar chains, peptide chains, carbonate ester chains, methylene chains, polyether chains, chains containing nitrogen in the main chain, or combinations thereof. In order to manufacture a flexible member for an electrochemical device, from the viewpoint of giving flexibility to the shaping material composition, the main chain of the polymer used in the present disclosure is preferably a non-cellulosic sugar chain, a peptide chain, a methylene chain, a polyether chain, or a polyethylene imine chain, with a methylene chain, a polyether chain, or a chain containing nitrogen in the main chain being most preferred. Examples of substituents or side chains bound to the main chain of the polymer used in the present disclosure include cyano group, hydroxyl group, carboxylic acid, carboxylic acid salt, chain ester, cyclic ester, chain amide, cyclic amide, pyridyl group, oxazoline group, polyether chain, amine, ammonium, organic ammonium. Two or more types of substituents or side chains may be present for one type of a polymer. The substituent or side chain of the polymer used in the present disclosure may be appropriately selected from the viewpoint of adjusting the polymer's solubility in the plasticizer or electrolytic solution. For example, when the amount of polar groups is increased, the polymer becomes water-soluble, whereas when the amount of polar groups is reduced, the polymer becomes water-insoluble. Alternatively, the polymer may be designed with reference to SP values.

From the viewpoint of imparting viscosity to the polymer solution, the weight-average molecular weight is preferably higher, more preferably 50,000 or more, and still more preferably 0.1 million or more. On the other hand, if the molecular weight is too high, the skin of the molded article may be roughened or the molding speed may be lowered, so that a component having a molecular weight of more than 10 million is preferably not more than 5% by weight of the entire polymer solution, and a component having a molecular weight of more than 5 million is more preferably not more than 5% by weight of the entire polymer solution.

Specific examples of the polymer (polymer (PI), polymer (P2)) include, but not limited to, synthetic polymers such as polyethylene oxide, sodium polyacrylate, lithium polyacrylate, polyacrylic ester, polyvinyl alcohol, poly-N-vinylpyrrolidone, polyvinyl acetate, polyoxazoline, polyacrylamide, poly-N-vinylacetamide, and copolymers containing monomeric units thereof, and deliquescent polymers such as epichlorohydrin-organic amine condensates (e.g., dimethylamine-epichlorohydrin-ethylenediamine copolymers, polyamidoamine epichlorohydrin); natural polymers such as cyclodextrins (α-cyclodextrin, β-cyclodextrin or γ-cyclodextrin, etc.), tamarind gum, gum arabic, guar gum, carrageenan, quince seed, alpha starch, tragacanth gum, carob gum, pectin, galactan, karaya gum, agar, algecolloid, xanthan gum, dextran, succinoglucan, pullulan, collagen, gelatin, casein, albumin alginate, mucin, fucoidan, sulfated fucose, polyglutamic acid (γ polyglutamic acid), mannan, and mannose; and semi-synthetic polymers such as carboxymethyl starch, methylhydroxypropyl starch, methyl cellulose, hydroxyethyl cellulose, hydroxypropyl cellulose, methylhydroxypropyl cellulose, sodium cellulose sulfate, sodium carboxymethylcellulose (CMC-Na), sodium alginate, and propylene glycol alginate. From the viewpoint of maintaining a plasticized state in a wide range of conditions, the polymer used in the present disclosure is preferably a polymer containing ethylene oxide (EO) as a monomer unit (e.g., polyethylene oxide, high ethylene oxide content-ethylene oxide copolymer, low ethylene oxide content-ethylene oxide copolymer), a polyoxazoline-based polymer (e.g., polyoxazoline, oxazoline copolymer), a poly-N-vinylacetamide polymer (e.g., poly-N-vinylacetamide, N-vinylacetamide copolymer), poly-N-vinylpyrrolidone, polyvinyl acetate, and epichlorohydrin-organic amine condensate (e.g., dimethylamine-epichlorohydrin-ethylenediamine copolymer, polyamidoamine epichlorohydrin). The term "high content" as used herein means that the proportion of a unit in all monomer units in a copolymer is, for example, 50mol% or more, and preferably 60mol%, 70 mol%, 80 mol% or 90 mol% or more. The term "low content" as used herein means that the proportion of a monomer unit in all monomer units in a copolymer is, for example, less than 50mol%, and preferably 40mol%, 30mol%, 20mol% or 10mol% or less. When the shaping material is alkaline, poly-N-vinylacetamide, poly-N-vinylpyrrolidone, polyacrylate- or alginate-based polymer is preferred as the polymer used in the present disclosure. From the viewpoint that moisture is hardly dissipated during shaping, a deliquescent polymer such as an epichlorohydrin-dimethylamine condensate (e.g., dimethylamine-epichlorohydrin-ethylenediamine copolymer) is preferred for the polymer used in the present disclosure. It is preferred that the viscosity of the polymer used in the present disclosure can achieve a high viscosity from the viewpoint of favorably holding the filler in the member, and the viscosity of the polymer solution is, for example, 100 cP or more, preferably 500 cP or more, more preferably 1,000 cP or more, and 5,000 cP or more. Preferably, the polymer used in the present disclosure is not gelled. The viscosity of the polymer solution can be measured by the method described below.

The term "viscosity" as used herein refers to a viscosity measured at a temperature of 25°C using an EMS viscometer (EMS-1000S, Kyoto Electronics Manufacturing Co., Ltd.) at a rotation speed of 1,000 rpm so that the composition of the polymer solution does not change under a sealed condition and moisture in air does not mix in. The viscosity as measured by this method is basically the same as that measured in accordance with JIS Z8803.

The amount of the polymer present in the polymer solution is preferably 90wt% or less from the viewpoint of flexibility of the member for an electrochemical device (e.g., an electrode) and needs to be 1wt% or more and preferably 3wt% or more for shaping ability. To meet the requirements of "polymer" in the shaping material composition, the polymer needs to be a "polymer" at the time of shaping and the polymer does not include those that polymerize into a polymer in an electrochemical device (e.g., battery). When the polymer is such that it is not plasticized by an electrolytic solution solvent, the flexibility of the electrode is low, and there is concern that the electrode is broken due to deformation by an external force or deformation due to a chemical reaction accompanying operation of the device. If the member contains a polymer soluble in an electrolytic solution solvent, the flexibility of the electrode is maintained, and there is little concern of breakage even when the device is deformed.

### <First polymer (P1)>

In the disclosed method for manufacturing a member for an electrochemical device, since the first polymer (P1) is plasticized by the plasticizer (P-S), a polymer having a property of being plasticized by the plasticizer (P-S) used in the present disclosure is used as the polymer (P1). In addition, from the viewpoint of maintaining flexibility even after being used in an electrochemical device, a polymer having a characteristic of being plasticized even with the electrolytic solution solvent (E-S) is preferred for the polymer (P1). In addition, when the disclosed method for manufacturing a member for an electrochemical device comprises crosslinking the polymer (P1), the polymer (P1) may be a crosslinkable polymer. Examples of crosslinkable polymers include irreversibly crosslinkable polymers and reversibly crosslinkable polymers, with irreversibly crosslinkable polymers being preferred. Further, examples of crosslinkable polymers include thermally crosslinkable polymers and UV crosslinkable polymers. Further, examples of crosslinkable polymers include polymers which crosslink with a crosslinking agent and self-crosslinkable polymers. Examples of polymers that crosslink with a crosslinking agent include those having a crosslinkable group such as an unsaturated bond, an epoxy group, or an oxetane group in the molecular. The polymer (P1) can be appropriately selected from the above-described polymers according to the type of the plasticizer (P-S) and the electrolytic solution solvent (E-S). Examples of the combination of the polymer (P1) and the plasticizer (P-S) and the electrolytic solution solvent (E-S) include those described later, for example.

### <Secondary polymer (P2)>

The shaping material composition may further comprise a second polymer (P2) which is plasticized by the plasticizer (P-S) but not dissolved in the electrolytic solution. In this case, in the disclosed method for manufacturing a member for an electrochemical device, the first polymer (P1) and the second polymer (P2) are plasticized by the plasticizer (P-S). It is advantageous for the shaping material composition to comprise the polymer (P2) in terms of limiting contact between the filler and the electrolytic solution. By restricting the contact between the filler and the electrolytic solution, the occurrence of unwanted reactions is reduced whereby the life of the electrochemical device is prolonged. The polymer (P2) can be appropriately selected from the above-described polymers according to the type of the plasticizer (P-S) and the electrolytic solution. Examples of the combination of the polymer (P2) and the plasticizer (P-S) and the electrolytic solution include those described later, for example.

### <Plasticizer (P-S)>

The plasticizer (P-S) is water, an ionic liquid, or a mixture thereof. Examples of ionic liquids include, but are not limited to, N,N-diethyl-N-methyl-N-(2-methoxyethyl)ammoniumbis(trifluoromethanesulfonyl)imide (DEME-TFSI, non-water-soluble ionic liquid), 1-ethyl-3-methylimidazolium bis(trifluoromethanesulfonyl)imide (EMI-TFSI, non-water-soluble ionic liquid), and N,N-diethyl-N-methyl-N-(2-methoxyethyl)-tetrafluoroborate (DEME-BF4, water-soluble ionic liquid). The plasticizer (P-S) can be widely selected from those capable of plasticizing the polymer (P1) at 25°C. In addition, when the electrochemical device has an unsealed site like an actuator or an air battery, moisture in air is also included in the electrolytic solution solvent (E-S). When water and an ionic liquid are used in combination upon processing, the ionic liquid remains even if the entire amount of water is volatilized, so that a certain degree of flexibility of the battery member is maintained. In the case of processing with only an ionic liquid, the battery member is always flexible. The amount of the plasticizer (P-S) for plasticizing the polymer is not particularly limited. However, it is often 5% by weight or more based on the weight of the polymer and plasticization can be accomplished in many cases when the amount is 10% by weight or more. Further, the plasticizer (P-S) content in the shaping material composition may be, for example, 3% by weight or more, preferably 5% by weight or more. Anyway, it is better to check the actual properties, not the quantities, when determining the plasticizer (P-S) content.

### <Electrolytic solution solvent (E-S) and electrolyte>

As the electrolytic solution solvent (E-S) and the electrolytic solution, any electrolytic solution used in electrochemical devices can be used without any particular limitation. Examples of the electrolytic solution solvent (E-S) include organic solvents such as those used as the plasticizer (P-S) (i.e., water, an ionic liquid, or a mixture thereof), propylene carbonate (PC), ethylene carbonate, chain carbonic acid esters, lactone, chain carboxylic acid esters, acetonitrile, sulfolane, glymes, chain sulfonate, dinitrile compounds, cyclic ethers, and fluorinated ethers. Examples of electrolytic solutions include electrolytes (e.g., sodium chloride, potassium chloride, ammonium chloride, zinc chloride, lithium sulfate, magnesium sulfate, sodium hydroxide, lithium bis(fluorosulfonyl)imide (LiFSI), lithium bis(trifluoromethanesulfonyl)imide (LiTFSI), lithium tetrafluoroborate (LiBF₄), magnesium bis(trifluoromethanesulfonyl)imide (Mg(TFSI)₂), and sodium bis(trifluoromethanesulfonyl)imide (NaTFSI)) dissolved in the electrolytic solution solvent (E-S), and the electrolytic solution solvent (E-S) (e.g., ionic liquids, mixtures of water and ionic liquids) which is also an electrolyte. Examples of ionic liquids include those described above. For a device having a thick (such as more than 100 µm) electrode, it is preferred to select a solvent or a salt having high ion conductivity; specifically, as such a solvent, it is preferred to select water, acetonitrile, ethylene glycol dimethyl ether, methyl acetate, bis(2,2,2-trifluoroethyl)ether, or 1,1,2,2-tetrafluoroethyl2,2,3,3-tetrafluoropropyl ether, and as such an electrolyte salt, it is preferred to select a salt of FSI anion.

### <Examples of polymers (P1), (P2)>

When the plasticizer (P-S) is water and the electrolytic solution solvent (E-S) is propylene carbonate (PC), examples of polymers that can be selected as the polymer (P1) include polyethylene oxide (PEO), high ethylene oxide (EO) content EO copolymers, polyoxazoline, poly-N-vinylacetamide, carboxy methylcellulose (CMC), sodium polyacrylate, sodium alginate, and polyvinyl alcohol (PVOH). In this case, examples of polymers that can be selected as the polymer (P1) also capable of being plasticized by the electrolytic solution solvent (E-S) include PEO, high EO content EO copolymers, polyoxazoline, and poly-N-vinylacetamide. In this case, examples of polymers that can be selected as the polymer (P2) include CMC, sodium polyacrylate, sodium alginate, and PVOH.

When the plasticizer (P-S) is water and the electrolytic solution solvent (E-S) is water, examples of polymers that can be selected as the polymer (P1) include PEO, high EO content EO copolymers, CMC, sodium polyacrylate, sodium alginate, PVOH, polyethyleneimine, polyoxazoline, and poly-N-vinylacetamide. In this case, the polymer (P1) also capable of being plasticized by the electrolytic solution solvent (E-S) may also be selected from these polymers.

When the plasticizer (P-S) is an ionic liquid and the electrolytic solution solvent (E-S) is an ionic liquid, examples of the polymer (P1) include PEO, high EO content EO copolymers, low EO content EO copolymers, styrene acrylic copolymers, cellulose, polyoxazoline, and poly-N-vinylacetamide. In this case, the polymer (P1) also capable of being plasticized by the electrolytic solution solvent (E-S) may also be selected from these polymers.

When the plasticizer (P-S) is an ionic liquid and the electrolytic solution solvent (E-S) is a mixed liquid of an ionic liquid and water, examples of the polymer (P1) include PEO, high EO content EO copolymers, polyoxazoline, poly-N-vinylacetamide, low EO content EO copolymers, styrene acrylic copolymers, and cellulose. In addition, in this case, examples of polymers that can be selected as the polymer (P1) also capable of being plasticized by the electrolytic solution solvent (E-S) include PEO, high EO content EO copolymers, polyoxazoline, and poly-N-vinylacetamide. In addition, in this case, examples of polymers that can be selected as the polymer (P2) include low EO content EO copolymers, styrene acrylic copolymers, and cellulose.

### <Plasticized Polymer>

The term "plasticized" as used herein for a polymer means that its definite shape is lost (i.e., made liquid or rubbery) by mixing the polymer with a solvent (e.g., the plasticizer (P-S), electrolytic solution solvent (E-S) or electrolytic solution) and a lump of the plasticized polymer, even after divided into two or more portions, can be merged into one lump. However, because it cannot determine whether or not the polymer is plasticized after a crosslinking operation is performed, the property for a non-crosslinked polymer is also applied to a crosslinked one. When the plasticizer (P-S) is an ionic liquid having a repeat structure, the ionic liquid itself is regarded as the "polymer (PI) plasticized by the plasticizer (P-S)."

The amount of the plasticizer (P-S) for plasticizing the polymer (P1) is not particularly limited and any amount may be used as long as the polymer (P1) is plasticized. The amount of the plasticizer (P-S) may be usually 5% by weight or more based on the polymer (P1). Plasticization can be accomplished in many cases when the amount is 10% by weight or more.

### <Organic solvent>

The shaping material composition used in the present disclosure is substantially free of an organic solvent. "Organic solvent" refers to a nonionic organic compound having a molecular weight of 1,000 or less, which is neither a polymer nor an ionic liquid. Inclusion of organic solvent is not preferred from the viewpoint of fire and operator's health. However, because addition of small amounts of organic solvent does not interfere with the implementation of the present disclosure, the organic solvent can be added up to 10% by weight or less based on the total amount of the polymer and the plasticizer (P-S) in the shaping material composition.

### <Pseudo-crosslinking agent>

The shaping material composition used in the present disclosure may further comprise the following components and configuration (formation of pseudo-crosslinks). When the shaping material composition include the following components and configurations, pseudo-crosslinks can be formed to increase the strength of the member without losing plasticity:
Polyvalent ions (especially, polyethers and polyvalent cations, carboxylic acids and polyvalent cations, polyvinyl alcohols and polyvalent cations, polymers with cationic groups and polyvalent anions, polyethyleneimines and polyvalent ions);
Polyethyleneimines and polycarboxylic acid compounds;
Polyvinyl alcohols and borate borax (sodium tetraborate, lithium tetraborate); or
Triblock polymers with hydrophobized ends.

### <Other components of shaping material composition>

The shaping material composition used in the present disclosure may further comprise acids, bases, and electrolyte salts for operating the device.

### <Ratios of components of shaping material composition>

When it is desired to enhance the self-supporting property of the shaping material composition used in the present disclosure, it is possible to enhance the self-supporting property by adding a fiber component, increasing the amount of the filler, reducing the particle size of the filler, or increasing the amount of the polymer.

### <Shaping operation>

The disclosed member for an electrochemical device is manufactured by performing at least one shaping operation selected from the following Group A on the above-described shaping material composition.

Group A: extrusion, injection into a mold, stretching, compression molding, thickness reduction by pressurizing, thickness uniformization by pressurizing, cutting, hole boring, shaving, bending into a final shape for housing in an electrochemical device container, and lamination of shaping material compositions having different compositions.

Because the shaping material composition used in the present disclosure has plasticity and self-supporting property, it is possible to impart a desired shape to the member for an electrochemical device by the shaping operation, and the imparted shape can be maintained throughout the manufacturing process. Further, because a desired shape can be imparted without drying or other operation, it is possible to reduce changes in the quality of the member associated with changes in the solvent (e.g., water) amount in the manufacturing process as compared with cases where a slurry is applied and dried to form a member for a device, and also quality can be recovered by absorbing the solvent such as water after formation.

Different shaping operations selected from Group A may be performed or the same shaping operation may be repeated. At least one shaping operation selected from Group A is performed in a state in which the shaping material composition is not in contact with a current collector foil. At least one shaping operation selected from Group A may be performed in a state in which the shaping material composition is not in contact with a porous separator membrane.

The shaping operation can be performed using known processing devices such as rollers, presses, cutters, milling cutters, drills, or the like. The surface of the roller or the like is preferably made of metal, ceramic, glass, fluorine-based polymer, or silicone-based polymer. The surface is also preferably non-adhesive. It is also possible to control the surface adhesiveness by applying fine irregularities to the roller. In the shaping operation, when temporarily placing the member, it may be placed onto a net, a porous plate, or a take-off jig with embossed or satin-finished surface. In the shaping operation, a tape having a constant thickness may be applied to a roller or the like for thickness control. When the roller is patterned, the member can be shaped such that the roller shape is transferred to the member. In the case where the member is shaped by a roller, a smaller diameter is preferred because less material is attached and cleaning is easy.

In the shaping operation, the shaping material composition may be shaped into a sheet. The thickness accuracy when the composition has been shaped into a sheet preferably within ±10%, and more preferably within ±5%. This improves adhesion to a current collecting foil or other members. When the sheet is formed, when the sheet surface is preferably corrugated, so that the sheet does not easily adhere to a shaping device such as a roller and also that thickness control becomes easy because the sheet is easily. The operation of making a corrugated sheet may be accomplished by making a corrugated die outlet, by shaping a sheet, extruded in flat shape, with a grooved roller or embossed roller, or by forming grooves with a blade. The difference in height between the highest portion and the lowest portion of irregularity is preferably 10% or more of the average thickness. The thicker the member, less sticking to the device and hence the member is easy to manufacture. The thickness of the member may be preferably 100 µ or more, more preferably 200 µ or more. When the member is an insulating layer, it is preferred that the insulating layer is thin from the viewpoint of its adhesion another member and follow-up property. The insulating layer is easily peeled off at the interface if it is too thick. The thickness of the insulating layer may be preferably 100 µ or less, more preferably 50 µ or less, and still more preferably 20 µ or less.

It is preferred to store the shaping material composition in a sealed container as much as possible when it is not used. In addition, during the process or storage, a protective film for preventing moisture absorption and drying may be attached to the shaping material composition.

### <Additional steps>

The disclosed method for manufacturing a member for an electrochemical device may further comprise, for example, additional steps described below.

### <Crosslinking of polymer (P1)>

The disclosed method for manufacturing a member for an electrochemical device may further comprise crosslinking the polymer (P1). Crosslinking includes, for example, irreversible crosslinking and reversible crosslinking, with irreversible crosslinking being preferred. Further, crosslinking may be accomplished by known crosslinking methods such as, for example, thermal crosslinking, UV crosslinking, electron beam crosslinking, or radiation crosslinking. Crosslinking of an electrode and a conductive layer is preferably thermal crosslinking or electron beam crosslinking. Crosslinking of the insulating layer is preferably UV crosslinking because the material is transparent. Crosslinking also includes, for example, crosslinking using a crosslinking agent (e.g., UV initiator) and self-crosslinking. In the case of crosslinking using a crosslinking agent, the crosslinking agent is preferably added in an electrochemical device, and may be added, for example, in the shaping material composition, and may be added in a portion other than the shaping material composition (e.g., an electrolytic solution). Further, a low-molecular co-crosslinking agent or the like having a plurality of crosslinkable groups such as TAIC (triallyl isocyanurate) may be used in combination. The polymer (P1) and the crosslinking agent can be appropriately selected depending on the method of crosslinking. For example, when the crosslinking is self-crosslinking, a self-crosslinkable polymer may be selected for the polymer (P1). In order to make the polymer self-crosslinkable, for example, a polymer having an acetoacetyl group, an epoxy group, an oxetane group, an azetidinium group, a pyrrolidonyl group, or the like may be used. Such a self-crosslinkable polymer can be self-crosslinked by heating. Crosslinking of the polymer (P1) may be performed either during or after plasticization of the polymer (P1) with the plasticizer (P-S), and may be performed either before, during, or after the shaping operation. The crosslinking operation is preferably performed with the polymer (P1) being plasticized and may be performed prior to device assembly or may be performed by heating the device itself after device assembly. In addition, in the manufacture of an electrochemical device, each member may be crosslinked and then assembled, but when the structure of the electrochemical device is completed and then crosslinked, the whole can be integrated and durability is increased, which is preferred.

### <Feedback management>

The disclosed method for manufacturing a member for an electrochemical device may further comprise a feedback management step. The feedback control step comprises, for example, managing and feeding back the basis weight by measuring the characteristics (e.g., thickness) of the member. In the feedback control step, for example, the basis weight can be measured by measuring the characteristics (e.g., thickness) of the member. By measuring thickness, a manufacturing method for controlling and feeding back the basis weight can be implemented. Such a feedback control step does not require a measurement of the basis weight by X-rays or gamma rays and may be performed by a measurement using a contact type film thickness meter or a laser type film thickness meter.

### <Shaping-related steps>

The disclosed method for manufacturing a member for an electrochemical device may include compressing a plurality of strands consisting of the shaping material composition to form a sheet. The disclosed method for manufacturing a member for an electrochemical device may include obtaining a member by scraping from a lump of the shaping material composition. The disclosed method for manufacturing a member for an electrochemical device may include bonding the shaping material composition to a substrate (e.g., current collector, porous separator membrane). Bonding of the shaping material composition to the substrate may be performed after shaping the shaping material composition to a desired thickness. Bonding of the shaping material composition may be accomplished for example by substantially simultaneously bonding the shaping material composition from front and back sides of the substrate, or by bonding the shaping material composition to the front side of the substrate and then to the back side of the substrate. When the substrate is a conductive substrate, e.g., a current collector such as a current collector foil, the substrate may have a conductive coating on a surface in contact with the shaping material composition. Examples of conductive coatings include carbon paints, ITO, and plated metal. The conductive coating may be applied to the collector foil side or may be applied to or sprayed on the member side. When the conductive coating has sufficient strength and conductivity, it may itself be a conductive substrate (e.g., current collector). The current collector may be a metal or one having a non-metal as a main component. The nonmetallic current collector can be, for example, one which is made conductive by blending conductive carbon or metal material with a polymer such as polyethylene, polypropylene, cellulose, or rubber. When the substrate is an insulating substrate (e.g., a separator substrate such as a porous separator membrane), the substrate may be one mainly containing a polymer. Examples of substrates containing a polymer as a main component include polyethylene, polypropylene, cellulose, and rubber. Further, after the shaping material composition is adhered to the substrate, the member may not be cut or bored together with the substrate. In addition, the disclosed method for manufacturing a member for an electrochemical device may include removing from a substrate the shaping material composition already attached to the substrate.

### <Non-plasticization by drying operation>

The disclosed method for manufacturing a member for an electrochemical device may include bringing the shaping material composition into a non-plasticized state by removing moisture with a drying operation. The drying operation may be performed before or after incorporating (e.g., shaping) the shaping material composition into a final shape for placing the member in a device. The drying operation may be performed for example by vacuuming, in a low humidity atmosphere, or by heating. Vacuuming refers to reducing the pressure to such an extent that moisture contained in the member is removed, e.g., reducing to 100 Pa, preferably 10 Pa, and more preferably 1 Pa. Low humidity atmosphere refers to an atmosphere having a humidity sufficient to remove moisture contained in the member, and may be, for example, an atmosphere having a relative humidity of 80% or less, 70% or less, 60% or less, 50% or less, 40% or less, 30% or less, 20% or less, or 10% or less at room temperature. Heating refers to placing the member in an environment having a temperature at which moisture contained in the member is removed and also the member is not subjected to degradation. The temperature may be, for example, 50°C or higher, preferably 80°C or higher, more preferably 100°C or higher, and may be, for example, 300°C or lower, preferably 200°C or lower, more preferably 150°C or lower. The drying operation may be performed in a state in which the shaping material composition is not in contact with a current collector foil. The drying operation may be performed in a state in which the shaping material composition is not in contact with a porous separator membrane. When performing drying after the plasticized electrochemical device member (e.g., electrode) is finally shaped, the preceding drying operation with a drying oven, which is typically performed, can be omitted. In this case, since the member is shaped in a plasticized state, it is possible to prevent the member from being damaged because no excessive force to provide the final shape is not applied.

### <Recovery of plasticized state after non-plasticization>

The disclosed method for manufacturing a member for an electrochemical device may include recovering a plasticized state by performing hydration or humidification again after the shaping material composition has become a non-plasticized state. Hydration may be performed, for example, under conditions in which dropping or spraying is performed for 1 second at 25°C. Humidification may be performed, for example, under conditions of 25°C at 99% RH. The shaping material composition may be incorporated (e.g., shaped) into a final shape for placing the member in a device after the plasticized state has recovered.

### <Storage of member for electrochemical device>

During storage of the disclosed member (e.g., electrode) for an electrochemical device, the amount of the plasticizer (P-S) is preferably low because adhesion to one another can be prevented. The operation for reducing plasticizer (P-S) for storage does not need to be performed until the polymer does not exhibit a liquid or rubbery state. The plasticizer (P-S) is preferably reduced to 90% or less, more preferably 80% or less, based on the total amount of the plasticizer (P-S) added. However, when only an ionic liquid is used as the plasticizer (P-S), such a plasticizer (P-S) reduction operation cannot be performed. When the electrochemical device member is highly sticky, it is preferred to insert a plastic film between the electrochemical device members during storage. Any material can be used for the plastic film but PE, PP, PET, PTFE or the like is suitable. The plastic film may be subjected to release treatment or roughening treatment.

### <Manufacturing method including recycling of off-cut >

The disclosed method for manufacturing a member for an electrochemical device may include manufacturing a next member again using an off-cut of the shaping material composition generated in the process of shaping the shaping material composition. Since the shaping material composition used in the present disclosure has plasticity and self-supporting property, irreversible quality variation is suppressed in the manufacturing process, so that the off-cut of the shaping material composition can be used for manufacturing the next member again. When the off-cut of the shaping material composition is reused, it is preferred from the viewpoint of quantitative property to dry the composition to the equilibrium moisture content of an environment and then rehydrate it. In the case of rehydrating the member, an operation of raising the atmospheric humidity, spraying, dropping, electrostatic spraying, immersion, or the like can be suitably used. When an ionic liquid, an organic solvent or the like is added to the member, an operation such as spraying, dropping, electrostatic spraying or immersion can be suitably used.

### <Conditions of manufacturing method>

The disclosed method for manufacturing a member of an electrochemical device (e.g., the operation for manufacturing a battery member) may be performed in a normal humidity environment or in a dry environment (dry room or glove box). When carried out in a dry environment of 50% RH or less, it is preferred to add an ionic liquid. From the viewpoint of suppressing water dissipation, it is preferred to carry out the method in a low temperature or a high humidity environment.

### (Method for recycling member for electrochemical device)

The shaping material composition used in the present disclosure has plasticity and self-supporting property, whereby irreversible quality changes are reduced in the manufacturing process. Thus, the member can be recycled for example using the shaping material composition (e.g., shaping material composition already bonded to a substrate, the shaping material composition in a non-plasticized state, and an off-cut of the shaping material composition) in an intermediate process of manufacturing. A method for recycling the member for an electrochemical device may include, for example, removing from a substrate the shaping material composition already attached to the substrate. Further, the method for recycling the member may include, for example, recovering a plasticized state by performing hydration or humidification again after the shaping material composition has become a non-plasticized state. In addition, the method for recycling the member may include, for example, manufacturing the next member again using an off-cut of the shaping material composition generated in the process of shaping the shaping material composition.

### (Method for manufacturing electrochemical device)

The disclosed method for manufacturing an electrochemical device comprises obtaining a member in the above-described method for manufacturing or recycling a member for an electrochemical device.

### (Member for electrochemical device)

The disclosed member for an electrochemical device is obtainable by the above-described method for manufacturing or recycling a member for an electrochemical device. Examples of the disclosed member for an electrochemical device include electrodes (e.g., positive and negative electrodes), insulating layers (e.g., insulating films), and adhesive layers. The member for an electrochemical device is preferably an electrode or an insulating layer. The electrodes also include air electrodes of air batteries. The insulating layer may be used as an insulating layer of a power storage device such as a lithium ion battery or may be attached to a glass or the like having a conductive ITO (indium tin oxide) layer formed thereon for use in a dye-sensitized solar battery, an electrochromic device, or other devices. The insulating layer may be used in a plasticized state for device assembly or may be dried and used in a non-plasticized state. Preferred embodiments also include assembling a device without crosslinking and finally performing crosslinking with ultraviolet rays, heat, or the like.

### (Electrochemical device)

The disclosed electrochemical device comprises the above-described member for an electrochemical device. Examples of the disclosed electrochemical device include non-aqueous or water-containing primary batteries such as lithium primary batteries, manganese primary batteries (e.g., manganese zinc primary batteries, manganese lithium primary batteries); non-aqueous or water-containing secondary batteries such as lithium ion secondary batteries (non-aqueous, water-containing), lithium metal secondary batteries, sodium ion secondary batteries, potassium ion secondary batteries, magnesium secondary batteries, and aluminum secondary batteries; air batteries; solar batteries such as dye-sensitized solar batteries; capacitors such as electric double layer capacitors, and lithium ion capacitors; electrochromic display devices; electrochemical light emitting devices; electric double layer transistors; and electrochemical actuators. The electrochemical device is preferably a non-aqueous secondary battery, more preferably a lithium ion secondary battery.

The disclosed electrochemical device may comprise, for example, an electrode as the member for an electrochemical device. The electrochemical device may include an electrode obtained by the manufacturing method or recycling method described later, and one electrode (counter electrode). The counter electrode may include, for example, at least one selected from an alkali metal (e.g., lithium, sodium, potassium, rubidium, cesium), an alkaline earth metal (e.g., beryllium, magnesium, calcium, strontium, barium), metallic aluminum, and silver.

In the case where the disclosed electrochemical device is a Li ion battery, when a perforated current collecting foil is used in the manufacture of the Li ion battery, vertical pre-doping can be performed by disposing a Li metal electrode inside the cell in addition to the positive and negative electrodes. This is an effective method when an active material having an initial irreversible capacity is used.

The disclosed electrochemical device may be either a water-containing electrochemical device or a nonaqueous electrochemical device. Examples of water-containing electrochemical devices include electrochemical devices containing water in the electrolytic solution (e.g., water-containing batteries such as water-containing lithium ion secondary batteries, manganese zinc primary batteries). Examples of nonaqueous electrochemical devices include electrochemical devices whose electrolytic solution is dissolved in organic solvent and does not contain water (e.g., nonaqueous batteries such as nonaqueous lithium ion secondary batteries, lithium primary batteries, manganese lithium primary batteries). The water-containing electrochemical device and nonaqueous electrochemical device may be, for example, a nonaqueous electrochemical device that comprises as a carrier ion at least any of an alkali metal ion (e.g., lithium ion, sodium ion, potassium ion), an alkaline earth metal ion (e.g., beryllium ion, magnesium ion, calcium ion), an aluminum ion, a silver ion, an organic nitrogen cation (e.g., triethylmethylammonium 1-ethyl-3-methylimidazolium), and a halide anion (e.g., bromide ion, iodide ion).

### EXAMPLES

The following provides a more specific description of the present disclosure based on Examples. However, the present disclosure is not limited to the following Examples.

In the following description, the phrase "successfully bent" means that no damage was observed even when a member was bent by winding it around a cylinder having a constant diameter. The meanings of the terms "self-supporting and "plasticity" are as described above.

Although experimental examples using lithium-ion batteries and a manganese battery are described below, the same effect is obtained for other devices.

### (Example 1: Manufacture and evaluation of electrode sheet prepared using polyethylene oxide (PEO))

In a laboratory having a temperature of 25°C and a humidity of 90%RH, 100 g of lithium cobaltate (Cell Seed C, Nippon Chemical Industrial Co., Ltd., average particle diameter: 20 µm) as an active material, 3 g of acetylene black as a conductive aid, 8 g of ion-exchanged water as a processing solvent, 1 g of polyethylene oxide (PEO) (Sigma Aldrich) having a weight-average molecular weight of 1 million as a polymer P1, and 1 g of polytetrafluoroethylene (PTFE) (Sigma Aldrich) as a fibrous material were weighed into a mortar and mixed to obtain a uniform electrode composition. 1 g of the electrode composition was separated and shaped into a sheet (electrode sheet 1-1) having a thickness of 200 µm using a SUS hand roller having a diameter of 3 cm on a releasable polyethylene terephthalate (PET) film. Upon immediate evaluation, the sheet had self-supporting property and plasticity and was successfully bent at a diameter of 2 mm. At this time, polyethylene oxide became an aqueous solution, which is considered to have contributed to the flexibility of the electrode. The sheet had a tendency that the edges were slightly thinner than the center, with an average thickness of 197 µm at 5 mm from the edges. If necessary, the edges may be trimmed. The trimmed edge can be used again for electrode fabrication.

### (Example 2: production, evaluation, and recycling of electrode sheet comprising PEO-based polymer)

In a laboratory having a temperature of 25°C and a humidity of 90%RH, 100 g of lithium cobaltate, 3 g of acetylene black, 8 g of ion-exchanged water, 1 g of a random copolymer of ethylene oxide-propylene oxide (molar ratio of 9:1) having a weight-average molecular weight of 1 million as a polymer P1, and 1 g of PTFE were weighed into a mortar and mixed to obtain a uniform electrode composition. 1 g of the electrode composition was separated and sandwiched between releasable PET films, and a SUS hand roller having a diameter of 3cm was used to obtain a sheet having an average thickness of 2 mm (electrode sheet 2-1). Upon immediate evaluation, this sheet was slightly sticky and had self-supporting property and plasticity. A sheet (electrode sheet 2-2) with an average thickness of 200 µm (195-205 µm) as obtained by further pressing with the hand roller was successfully bent at a diameter of 2 mm. At this time, the copolymer become an aqueous solution, which is considered to have contributed to the flexibility of the electrode.

When the electrode sheet 2-2 was left in a laboratory having a temperature of 25°C and a humidity of 55%, the surface dried in about 1 minute and adhesiveness was reduced. When the electrode sheet was left as it was for 1 day, there was no change in thickness, but weight was reduced by 7% from the initial weight. It is considered the electrode sheet became a sheet wherein 99% of added water was volatilized (Comparative electrode sheet 2-2), and it was determined that the polyethylene oxide was not plasticized. When this was attempted to bend, it broke at an inner angle of about 120° before it was wrapped around a cylinder. The density of the electrode sheet in dry state before breakage was 3 g/cm³. The volume fraction of filler in this electrode sheet was 61% by volume, a sum of the volume fractions of lithium cobaltate and acetylene black. Further pressing with a high-pressure roll press can increase the density.

The electrode sheet 2-2 was further pressed with a roller at 200 N/cm linear pressure to reduce its thickness to 50 µm (49-51 µm) to prepare an electrode sheet 2-3. The electrode sheet 2-3 was bonded to a separately prepared conductive carbon-containing conductive polyethylene film (surface resistivity: 10⁴ Ω/sq. or less, thickness: 50 µm) as a current collector to manufacture a lithium-ion battery positive electrode (positive electrode 2-4).

The electrode sheets 2-1, 2-2, 2-3 and the positive electrode 2-4 were cut with scissors in a laboratory with a temperature of 25°C and a humidity of 55%. Each was linearly cut into two. At this time, there was no occurrence of small pieces such as fine powder, with no shaping material adhering to the scissors. When these were placed on top of one another again and stretched with a hand roller, they were merged into one to regenerate a sheet that looked like the initial one.

### (Comparative Example 1: Evaluation of sheet with volatilized moisture)

When the comparative electrode sheet 2-2 was cut with scissors in the same manner as in Example 2, cracks were also generated in portions other than the cut portions, resulting in failure to obtain a straight cut surface and also in the generation of fine powder. Fine powder also adhered to the scissors. The divided portions of the sheet were grouped together and stretched with a hand roller, but they were not merged into one but rather were fragmented.

### (Comparative Example 2: Manufacture and evaluation of slurry coated Electrodes)

Electrodes were prepared by the slurry coating method, which is common in the manufacture of lithium ion batteries and electric double layer capacitor electrode. Electrode slurries prepared using lithium cobaltate, graphite and activated carbon all showed plasticity, but did not show self-supporting property. The electrode slurry prepared using graphite was applied onto an aluminum foil having a thickness of 25 µm, and when cutting was attempted with scissors while the slurry was undried, a large amount of the slurry was undesirably attached to the scissors. In addition, the slurry undesirably flowed out from the cut to the outside of the current collector foil.

### (Comparative Example 3: Manufacture and evaluation of slurry coated dry electrode)

The coated electrodes of Comparative Example 2 were dried in an oven at 60°C and an attempt was made to peel off the electrode mixed material 5 mm from the edge of the electrode in a dry state. A plastic spatula was used to peel the interface between aluminum and mixed material. Fine powder was generated by peeling and adhered to the periphery.

### (Example 3: Evaluation of adhesion of electrode sheet prepared using PEO-based polymer)

The electrode sheet 2-3 of Example 2 was cut into a 5 cm × 5 cm square piece and placed on an aluminum foil having a thickness of 25 µm in a laboratory with a temperature of 25°C and humidity of 55%, and the entire surface of the electrode sheet 2-3 was lightly pressed from above with a hand roller. As a result, the electrode sheet 2-3 adhered to the aluminum foil. Since the edge of the sheet was slightly thinner, one cut was formed around the outer circumference at a position 5 mm from the edge such that the cut does not reach the current collecting foil, and the edge was pinched with tweezers to peel off the sheet. The shaping material of the outer circumference could be removed as a rectangular frame shape without generating small pieces or fine powder (positive electrode 3). When the resulting 4 cm × 4 cm square electrode sheet was left in a laboratory at a temperature of 25°C and a humidity of 55% for 24 hours, a weight decrease due to volatilization of moisture was observed as in Example 1, but adhesion between the electrode sheet 2-3 and the aluminum foil was maintained.

### (Example 4: Manufacture and evaluation of electrode sheet prepared using polymer other than PEO-based polymer)

A sheet was prepared in the same manner as in Example 1 except that the polymer P1 was replaced with poly-2-ethyloxazoline having a weight-average molecular weight of 0.5 million (Sigma Aldrich). Upon immediate evaluation, the sheet had self-supporting property and was successfully bent at a diameter of 2 mm.

### (Example 5: Manufacture and evaluation of electrode sheet containing second polymer (P2))

A lithium ion battery positive electrode (positive electrode 5) having a thickness of 50 µm was prepared in the same manner as in Example 2 except that 1 g of carboxy methylcellulose (CMC) was further added as the second polymer (polymer P2). The positive electrode 2-4 prepared in Example 2 and the positive electrode 5 were dried in vacuo at 40°C for 48 hours. Lithium ion batteries were manufactured with Li metal as a counter electrode and LiFSI/EC (=1/4) as an electrolytic solution. Each battery was charged and discharged at 1C rate. The positive electrode capacity retention rate after 200 cycles with respect to the initial capacity was 91% for the battery with the positive electrode 2-4 and 95% for the battery with the positive electrode 5, demonstrating that the battery containing the polymer P2 had a better capacity retention rate. The polymer P2, a component that does not dissolve or swell after immersed in an electrolytic solution, appeared to function as a coating for protecting the positive electrode active material surface.

### (Example 6: Manufacture and evaluation of electrode sheet prepared using deliquescent polymer)

A dimethylamine-epichlorohydrin-ethylenediamine copolymer having a weight-average molecular weight of 75,000 (Sigma Aldrich) was used as the polymer P1. The polymer exhibited deliquescence and absorbed moisture equivalent to 15% by weight of its own weight in a laboratory with a temperature of 25°C and a humidity of 55%, and spontaneously plasticized into an aqueous solution. 9 g of the spontaneously plasticized polymer solution 100 g of lithium cobaltate, 3 g of acetylene black, and 1 g of PTFE were weighed into a mortar and mixed to give a uniform electrode composition. 1 g of the electrode composition was sandwiched between releasable PET films, and a SUS hand roller having a diameter of 3 cm was used to obtain a sheet having an average thickness of 2 mm (electrode sheet 6). Upon immediate evaluation, the sheet was slightly sticky and had self-supporting property and plasticity. Further, a sheet (electrode sheet 6-2) with an average thickness of 200 µm (195-205 µm) as obtained by further pressing with the hand roller was successfully bent at a diameter of 2 mm. The copolymer became an aqueous solution and is considered to have contributed to the flexibility of the electrode. When this was left to stand for 24 hours, there was no change in weight, and the flexibility of the sheet was also maintained.

### (Example 7: Manufacture and evaluation of electrode sheet prepared using ionic liquid)

An experiment was carried out in a dry room where humidity was controlled to a dew point temperature of -40°C or less and air temperature was controlled to 25°C, and the raw materials used were dried well beforehand. 100 g of lithium cobaltate, 3 g of acetylene black, 11 g of DEME-TFSI (N,N-diethyl-N-methyl-N-(2-methoxyethyl)ammonium bis(trifluoromethanesulfonyl)imide) as a non-water-soluble ionic liquid, 1 g of a random copolymer of ethylene oxide-propylene oxide (molar ratio of 9:1) having a weight-average molecular weight of 1 million, and 1 g of PTFE were weighed into a mortar and mixed to give a uniform electrode composition. On a flat table made of SUS, the electrode composition was shaped into a sheet (electrode sheet 7) having an average thickness of 60 µm using a SUS roller having a diameter of 3 cm. The sheet had self-supporting property and plasticity and was successfully bent at a diameter of 1 mm. The moisture content of this sheet as measured by a Karl Fischer moisture meter was 46 ppm.

To further carefully remove moisture, the electrode sheet 7 was dried in vacuo at 100°C for 24 hours. The moisture of this sheet as measured by a Karl Fischer moisture meter was 4 ppm.

### (Example 8: Combined use of water and ionic liquid, and crosslinking of electrode)

With a sealed stirrer, 100 g of lithium cobaltate, 3 g of acetylene black, 6 g of N,N-diethyl-N-methyl-N-(2-methoxyethyl)ammonium bis(trifluoromethanesulfonyl)imide as a water-insoluble ionic liquid, 4 g of ion-exchanged water, 1 g of a random copolymer of ethylene oxide-allyl glycidyl ether (molar ratio of 9:1) having a weight-average molecular weight of 1 million, 1 g of PTFE, and 50 mg of PERCUMYL D as a thermal polymerization initiator were mixed at room temperature to give a uniform electrode composition. The electrode composition was separated, sandwiched between releasable PET films, and formed into a sheet (sheet 8-1) having a thickness of 200 µm using a SUS hand roller having a diameter of 3 cm. The sheet was slightly sticky, had self-supporting property and plasticity, and was successfully bent at a diameter of 2 mm.

When the sheet 8-1 was left in a laboratory having a temperature of 25°C and a humidity of 55%, the surface dried in about 1 minute and adhesiveness was reduced. Further, for the purpose of dehydration and crosslinking by heating, the sheet was dried in vacuo for 30 minutes with a vacuum dryer at 150°C. The weight was reduced by 3.5%. It is considered that a sheet (Comparative Sheet 8-2) was obtained in which almost 100% of the added moisture was volatilized, and it is determined that the sheet was in a state of being plasticized by the polymer ionic liquid. Comparative sheet 8-2 kept its flexibility and was successfully bend with a diameter of 5 mm. With scissors, the sheet was able to be cut into two pieces linearly without generation of fine powder or the like. However, when they were placed on top of each other and stretched with a hand roller, they were not merged into one, thus confirming that electrode strength was improved by crosslinking but merge ability lost due to disappearance of fluidity.

The crosslinking operation is preferably performed in a state where the polymer (P1) is plasticized. The crosslinking operation may be performed prior to device assembly as in this Example or may be performed by heating the device itself after device assembly.

### (Example 9: Manufacture and evaluation of electrode sheet prepared using cellulose nanofiber)

In a laboratory having a temperature of 25°C and a humidity of 90%RH, 100 g of lithium cobaltate, 3 g of acetylene black, 8 g of ion-exchanged water, 1 g of a random copolymer of ethylene oxide-propylene oxide (molar ratio of 90:5:5) having a weight-average molecular weight of 1 million, and 2 g of cellulose nanofiber (nanoforest-S, Chuetsu Pulp & Paper Co., Ltd.) were weighed into a mortar and mixed to obtain a uniform electrode composition. 1 g of the electrode composition was separated and sandwiched between releasable PET films, and a SUS hand roller having a diameter of 3 cm was used to obtain a sheet having an average thickness of 2 mm (electrode sheet 9-1). Upon immediate evaluation, this sheet was slightly sticky and had self-supporting property and plasticity. A sheet (electrode sheet 9-2) with a thickness of 200 µm as obtained by further pressing with the hand roller was successfully bent at a diameter of 2 mm. The polyethylene oxide become an aqueous solution and is considered to have contributed to the flexibility of the electrode.

### (Example 10: Spraying to electrode)

When a small amount of water was sprayed on the comparative sheet 2-2 obtained in Example 1 by spraying, the electrode absorbed the sprayed water to recover flexibility. The sheet was successfully bent at a diameter of 2 mm. When the weight of the electrode was measured, weight recovery corresponding to 80% of the initially-contained water was observed.

### (Example 11: Rehydration of electrode)

When the electrode fragments having no merge ability as obtained in Comparative Example 1 were collected, an amount of ion-exchanged water corresponding to the lost moisture was dropped on the collected electrode fragments, and then the electrode fragments were mixed again, an electrode mixed material similar to the initial one was obtained. Thus, a sheet similar to the sheet 1 was manufactured.

### (Example 12: Impregnation of electrode with electrolytic solution)

A separately prepared 1M LiTFSI/propylene carbonate solution was added dropwise to the comparative sheet 2-2 obtained in Example 1 in such a small amount that the electrolytic solution did not overflow from the electrode. It was confirmed that the electrolytic solution infiltrated into the electrode, whereby the flexibility of the electrode was recovered and the electrode was successfully bent with 2 mm. Because a random copolymer of ethylene oxide-propylene oxide (molar ratio of 9:1) is soluble in propylene carbonate, it was confirmed that the polymer could be plasticized by the electrolytic solution even in a device to maintain flexibility.

### Example 13: Graphite electrode

In a laboratory having a temperature of 25°C and a humidity of 90%RH, 40 g of graphite (604A, Nippon Carbon Co., Ltd.) as a negative electrode active material of a lithium ion battery, 7 g of ion-exchanged water, 1 g of a random copolymer of ethyleneoxide-propylene oxide (molar ratio of 9:1) having a weight-average molecular weight of 1 million, and 0.2 g of PTFE were weighed into a mortar and mixed to obtain a uniform electrode composition. 1 g of the electrode composition was separated and sandwiched between releasable PET films, and a SUS hand roller having a diameter of 3cm was used to obtain a sheet having an average thickness of 2 mm (electrode sheet 13-1). Upon immediate evaluation, this sheet was slightly sticky and had self-supporting property and plasticity. A sheet (electrode sheet 13-2) with an average thickness of 200 µm (195-205 µm) as obtained by further pressing with the hand roller was successfully bent at a diameter of 2 mm. This was further pressed by a hand roller to reduce the average thickness to 50 µm (49-51 µm) (electrode sheet 13-3) and adhered to an electrolytic copper foil having a thickness of 25 µm, thereby producing a lithium-ion battery negative electrode (negative electrode 13-3).

The dry electrode had a density of 1.74 g/cm³. The volume fraction of filler of this electrode was 70vol% for graphite only. Further pressing with a high-pressure roll press can increase density.

### (Example 14: Addition of solid lubricant)

A shaping material was prepared in the same manner as in Example 1 except that 5 g of graphite powder (KS4, TIMCAL Ltd.) was added as a solid lubricant. The shaping material was pressed with a roll at a linear pressure of 200 N/cm as in Example 1 to give a sheet having an average thickness of 45 µm (44-46 µm). The addition of a solid lubricant makes it possible to produce a thin sheet with the same processing forces.

### (Example 15: Electrode using nanosized Si)

10 g of silicon powder (average particle diameter: 100 nm) as a negative electrode active material of a lithium ion battery, 8 g of ion-exchanged water, and 1 g of a random copolymer of ethyleneoxide-propylene oxide (molar ratio of 9:1) having a weight-average molecular weight of 1 million were weighed into a mortar and mixed to obtain a uniform electrode composition. 1 g of the electrode composition was separated and sandwiched between releasable PET films, and a SUS hand roller having a diameter of 3 cm was used to obtain a sheet having an average thickness of 2 mm (electrode sheet 15-1). Upon immediate evaluation, this sheet was slightly sticky and had self-supporting property and plasticity. A sheet (electrode sheet 15-2) with an average thickness of 200 µm (195-205 µm) as obtained by further pressing with the hand roller was successfully bent at a diameter of 2 mm.

### Example 16: Activated carbon and carbon nanotubes (CNTs)

10 g of activated carbon (MSP-20, KANSAI COKE AND CHEMICALS COMPANY, LIMITED), 0.1 g of carbon nanotubes (CNTs) (ZEONANO SG101, Zeon Nano Technology Co., Ltd., average diameter: 4 nm, average length: 400 µm, BET specific surface area: 1,150 m²/g), 11 g of DEME-BF4 (N,N-diethyl-N-methyl-N-(2-methoxyethyl)-tetrafluoroborate) as a water-soluble ionic liquid, and 1 g of a random copolymer of ethylene oxide-propylene oxide (molar ratio of 9:1) with a weight-average molecular weight of 1 million were weighed into a mortar and mixed to obtain a uniform electrode composition. 1 g of the electrode composition was separated and sandwiched between releasable PET films, and a SUS hand roller having a diameter of 3 cm was used to obtain a sheet having an average thickness of 2 mm (electrode sheet 16-1). Upon immediate evaluation, this sheet was slightly sticky and had self-supporting property and plasticity. A sheet (electrode sheet 16-2) with an average thickness of 200 µm (195-205 µm) as obtained by further pressing with the hand roller was successfully bent at a diameter of 2 mm. Such sheets can be used as capacitor electrodes, fuel cell electrodes, air battery electrodes, electrochemical actuators, and the like.

In addition, although the sheets had fibers longer than the sheet thickness, no fibers were protruded from the electrode.

### Example 17: Manufacture of insulating layer

40 g of AEROSIL 380^{®} (AEROSIL 380 is a registered trademark in Japan, other countries, or both) (Evonik Industries AG) as a nanosized filler, 10 g of a random copolymer of ethylene oxide-propylene oxide (molar ratio of 90:10) having a molecular weight of 1 million, and 70 g of 1-butyl-3-methylimidazolium tetrafluoroborate as a solvent were weighed into a mortar and mixed to obtain a uniform insulating layer composition. A 50 µm-thick sheet (insulating layer 17) was obtained in the same manner as in Example 1. The sheet had self-supporting property and plasticity and was successfully bent at a diameter of 1 mm.

Such an insulating layer may be used as an insulating layer of a storage device such as a lithium ion battery, or it may be affixed to glass or the like having a conductive ITO (indium tin oxide) layer and used for a dye-sensitized solar battery, an electrochromic device, or the like.

### Example 18: Crosslinking of insulating layer

40 g of AEROSIL R711^{®} (AEROSIL R711 is a registered trademark in Japan, other countries, or both) (Evonik Industries AG; treated with methacryloxysilane) as a nanosized filler, 20 g of alumina, 10 g of a random copolymer of ethylene oxide-propylene oxide-allylglycidyl ether (molar ratio of 90:5:5) having a molecular weight of 1 million, 70 g of water as a solvent, and 500 mg of Irg651 as an ultraviolet crosslinking agent were weighed, and a sheet (insulating layer 18) having a thickness of 50 µm was obtained in the same manner as in Example 1. The sheet had self-supporting property and was successfully bent at a diameter of 1 mm. In the state of being sandwiched between releasable PET films, the insulating layer 1 was crosslinked by irradiation with ultraviolet rays while maintaining plasticity without performing a drying operation. In this way a crosslinked insulating layer 18 was obtained.

The insulating layer 18 was cut into a strip of 1 cm width and stretched while maintaining plasticity without performing a drying operation. The strip was broken at 5% elongation. When the crosslinked insulating layer 18 was stretched similarly, it was not broken even at 10% elongation. It is expected that the crosslinked insulating layer is less likely to break due to mechanical stress and has a higher effect of preventing internal short-circuiting of the device.

The insulating layer may be used in a plasticized state for device assembly or may be dried and used in a non-plasticized state. It is also preferred to assemble a device without crosslinking and finally crosslink the insulating layer with ultraviolet rays, heat, or the like.

### (Example 19: Manufacture of insulating layer containing solid electrolyte)

120 g of LAGP (Li_{1.5}Al_{0.5}Ge_{1.5}P₃O₁₂) powder (average particle size: 1 µm, density: 3.0 g/cm³) as a filler having lithium ion conductivity, 4.5 g of a random copolymer of ethylene oxide-propylene oxide (molar ratio of 90:10) having a molecular weight of 1 million, 42 g of 1-methyl-3-propylimidazolium bis(trifluoromethanesulfonyl)imide (Sigma Aldrich) as a solvent, and 3 g of PTFE were weighed into a mortar and mixed to obtain a uniform insulating layer composition. A 50 µm-thick sheet (insulating layer 19) was obtained in the same manner as in Example 17. The sheet had self-supporting property and was successfully bent at a diameter of 1 mm. The volume fraction of filler in this sheeting was 53vol% for LAGP only. The ion conductivity of the sheet had an ion conductivity of 1.0×10⁻³ S/cm as measured by the AC impedance method. The sheet is suitable as an insulating layer for a lithium-ion battery.

### (Example 20: Production example of alkaline)

70 g of lithium nickelate (Sigma Aldrich), which is strongly alkaline positive electrode active material of a lithium ion battery, 3 g of acetylene black, 8 g of ion-exchanged water, 1 g of carboxy methylcellulose (BSH-12, DKS Co., Ltd.), and 1 g of PTFE were weighed into a mortar and mixed to obtain a uniform electrode composition. 1 g of the electrode composition was separated and sandwiched between releasable PET films, and a SUS hand roller having a diameter of 3 cm was used to obtain a sheet having an average thickness of 2 mm (electrode sheet 20-1). Upon immediate evaluation, this sheet was slightly sticky and had self-supporting property and plasticity. A sheet (electrode sheet 20-2) with an average thickness of 200 µm (195-205 µm) as obtained by further pressing with the hand roller was successfully bent at a diameter of 2 mm. The CMC became an aqueous solution and is considered to have contributed to the flexibility of the electrode.

This sheet was attached to an aluminum foil having a thickness of 25 µm, allowed to stand for about 10 minutes, and then removed. The surface of the aluminum foil was corroded by alkali and whitened. This results in an increase in resistance when the sheet is used as a lithium ion battery electrode.

When the same operation was performed after drying of the sheet, whitening of the aluminum foil did not occur.

When the same procedure was carried out by changing the processing solvent to the ionic liquid DEME-TFSI (N,N-diethyl-N-methyl-N-(2-methoxyethyl)ammonium bis(trifluoromethanesulfonyl)imide), whitening of the aluminum foil did not occur.

### (Example 21: bonding of electrode and insulating layer)

When the electrode sheet 7 manufactured in Example 7 in a plasticized state and the insulating layer 19 manufactured in Example 19 in a plasticized state were bonded together so that no gas was entrapped between them, a sheet was obtained in which they were well bonded together and integrated.

### Example 22: Manufacture and combining of low-density electrode

A first electrode sheet (electrode sheet 22-1) was prepared in the same manner as in Example 1 except that thickness was changed to 100 µm. Further, a second electrode sheet (electrode sheet 22-2) was prepared by using 50 g of lithium cobaltate, an amount that is half of that in Example 1. The first electrode sheet was placed on an aluminum foil having a thickness of 25 µm, the second electrode sheet was placed on the aluminum, and they were bonded together and integrated so that no gas entrapped among them. In this way a composite electrode sheet was manufactured in which the upper and lower layers have different densities. In this case, bonding may be performed after the first electrode sheet is dried. The density as measured when the second electrode sheet was dried was 2.64 g/cm³. Therefore, the volume fraction of filler in this electrode is 61vol% in the lower layer and 47 vol% in the upper layer, adding lithium cobaltate and acetylene black. Such an electrode whose density becomes lower as it gets farther from the current collector has a low ion conduction resistance in comparison with electrode thickness, which is advantageous for increasing the power output and the operation speed of the device.

### (Example 23: Manufacturing method in material is extruded in block form and sliced)

With the composition of Example 2, a shaping material composition was produced by continuously discharging material in cylindrical shape having a diameter of 15 mm from a twin-screw extruder (L/D=30) having a die with a diameter of 15 mm. A steel cutter was provided which moves in a lateral direction with respect to the extruded cylinder, whereby the cylinder was sliced continuously into discs having a thickness of 200 µm and a diameter of 15 µm to prepare electrode sheets. By changing the die, a hollow cylinder such as macaroni can be manufactured. The die and cutter can be made of ceramic or plastic when generation of metal powder due to rubbing of metal is not desirable.

### (Example 24: Manufacturing method in which material is extruded in tubular form and cut-opened)

Material was extruded in tubular form having a film thickness of 500 µm using the extruder of Example 23 with the outlet changed to a ring-shaped die having an outer diameter of 50 mm and an inner diameter of 49 mm. A steel cutter was placed at a position 100 mm from the die and one point of a section of the tube was opened continuously. Continuous opening of the cut-opened tube resulted in a sheet with uniform thickness (494-506 µm) with the same thickness variation at the center and ends. The die and cutter can be made of ceramic or plastic when generation of metal powder due to rubbing of metal is not desirable.

### (Example 25: Manufacture with multiple strands)

The extruder of Example 23 was used. The die was changed to one having 20 cylinders having a die outlet with a diameter of 300 µm and disposed at intervals of 4 mm, and the extruded strands were sandwiched by two metal rollers (roll diameter: 30 mm, linear pressure: 200N) and shaped, whereby a sheet having an average thickness of 32 µm was produced. The roller surface may be ceramic or plastic when generation of metal powder due to rubbing of metal is not desirable.

### Example 26: Example of device manufacture

An aluminum foil having a thickness of 25 µm, the electrode sheet 2-3 of Example 2, the insulating layer 18 of Example 18, the electrode sheet 13-3 of Example 13, and a rolled copper foil having a thickness of 25 µm were wound in the order mentioned onto a metal rod having an outer diameter of 2 mm to obtain a wound body having a diameter of 10 mm. All of the sheets were flexible because they were in a plasticized state and were not broken upon winding. The wound body was accommodated in an aluminum laminate package and lightly pressed from the outside to flatten it. This was transferred into a vacuum dryer having a temperature of 100°C and dried for 6 hours. 1M LiPF₆ EC/DMC (30/70) as an electrolytic solution was injected to this and sealed in vacuo to prepare a lithium-ion battery. When this was charged and discharged at a 4.2V to 3.0V at 0.1C rate, a reversible capacity of 145 mAh/g per positive electrode active material was obtained, and it was found that it functions as a battery.

### Example 27: Example of manufacturing manganese battery

As an electrolytic solution, an aqueous solution containing 20% by weight of zinc chloride and 5% by weight of ammonium chloride was prepared. 100 parts of manganese dioxide (MnO₂, 99.5%, 133-09681, FUJIFILM Wako Pure Chemical Industries), 6 parts of acetylene black (Denka black, granular, Denka Company Limited), 2 parts of a random copolymer of ethylene oxide-propylene oxide (molar ratio of 9:1) having a weight-average molecular weight of 1 million as a polymer PI, 2 parts of PTFE, and 40 parts of the above electrolytic solution were weighed into a mortar and kneaded well to obtain a uniform electrode composition. 1 g of this electrode composition was separated, sandwiched between releasable PET films, and a self-supporting sheet having an average thickness of 2 mm was obtained by using a SUS hand roller having a diameter of 3 cm. As evaluated immediately, this sheet was slightly sticky and had self-supporting property and plasticity. Further, a sheet with an average thickness of 500 µm (497-503 µm) as obtained by further pressing with the hand roller was successfully bent at a diameter of 2 mm. The sheet was cut out into a circle of 14 mm diameter and bonded to a graphite sheet as a current collector (circle of 15 mm diameter) to form a positive electrode. Further, as a separator, paper (TF4535, thickness: 35 µm, NIPPON KODOSHI CORPORATION) was cut into a circle of 16 mm diameter and immersed in the above electrolytic solution to allow the electrolytic solution to be contained in the paper. Next, a zinc foil (99.99% purity, circle of 15 mm dimeter with 50 µm thickness, Nilaco Corporation) was prepared as a negative electrode. The positive electrode, the separator, and the negative electrode were laminated in the order mentioned to form a manganese battery, which was assembled into a coin cell of type 2032. The voltage of this battery before discharging was 1.55V, and when the battery was discharged with a 20 Ω load connected, the battery was able to be discharged at 40 mA/cm², and the voltage drop at this time was 0.1V.

### INDUSTRIAL APPLICABILITY

According to the present disclosure, it is possible to provide methods for manufacturing or recycling a member for an electrochemical device in which the problem of irreversible changes in the electrochemical device composition due to solvent reduction, moisture absorption, etc. during manufacture of the electrochemical device is unlikely to occur.

According to the present disclosure, it is also possible to provide a member for an electrochemical device in which the problem of irreversible changes in the electrochemical device composition due to solvent reduction, moisture absorption, etc. during manufacture of an electrochemical device is unlikely to occur; and an electrochemical device that comprises the member for an electrochemical device.

## Claims

1. A method for manufacturing a member for an electrochemical device, the method comprising performing at least one shaping operation selected from the following Group A on a shaping material composition that comprises:
at least one filler (F);
a plasticizer (P-S), being water, an ionic liquid, or a mixture thereof; and
a polymer (P1),
the shaping material composition being substantially free of an organic solvent and having plasticity and self-supporting property,
Group A: extrusion, injection into a mold, stretching, compression molding, thickness reduction by pressurizing, thickness uniformization by pressurizing, cutting, hole boring, shaving, bending into a final shape for housing in an electrochemical device container, and lamination of shaping material compositions having different compositions.

2. The method according to claim 1, wherein the polymer (P1) is a polymer also capable of being plasticized by an electrolytic solution solvent (E-S).

3. The method according to claim 1 or 2, wherein the polymer (P1) is a deliquescent polymer.

4. The method according to claim 1 or 2, wherein the polymer (P1) is a polymer containing ethylene oxide (EO) as a monomer unit, a polyoxazoline-based polymer, a poly-N-vinylacetamide-based polymer, or an epichlorohydrin-organic amine condensate.

5. The method according to any one of claims 1 to 4, wherein the filler (F) comprises an active material (A).

6. The method according to any one of claims 1 to 5, wherein the filler (F) comprises an inorganic solid electrolyte.

7. The method according to any one of claims 1 to 6, wherein the filler (F) comprises a fibrous material.

8. The method according to claim 7, wherein the fibrous material has a fiber length of 10 µm or more.

9. The method according to claim 7 or 8, wherein the fibrous material has a fiber length that is equal to or larger than a thickness of a member for an electrochemical device.

10. The method according to any one of claims 7 to 9, wherein the fibrous material has a nanosized fiber diameter.

11. The method according to any one of claims 1 to 10, wherein the filler (F) comprises a solid lubricant selected from the following Group B:
Group B: graphite, graphene, boron nitride, polytetrafluoroethylene (PTFE), perfluoroalkoxyalkane (PFA), molybdenum sulfide, tungsten disulfide, mica, talc, graphite fluoride, melamine cyanurate, and metallic soap.

12. The method according to any one of claims 1 to 11, wherein the filler (F) is nanosized.

13. The method according to any one of claims 1 to 12, wherein, a volume fraction occupied by the filler (F) in the shaping material composition is 50% by volume or more.

14. The method according to any one of claims 1 to 13, wherein the shaping material composition further comprises a polymer (P2) capable of being plasticized by the plasticizer (P-S) and insoluble in an electrolytic solution.

15. The method according to any one of claims 1 to 14, comprising irreversibly crosslinking the polymer (P1).

16. The method according to claim 15, wherein the crosslinking is thermal crosslinking.

17. The method according to claim 15, wherein the crosslinking is UV crosslinking.

18. The method according to any one of claims 15 to 17, wherein a crosslinking agent is added in the shaping material composition.

19. The method according to any one of claims 15 to 17, wherein a crosslinking agent is added in an electrolytic solution.

20. The method according to any one of claims 15 to 17, wherein the polymer (P1) is a self-crosslinkable polymer.

21. The method according to any one of claims 1 to 20, comprising controlling and feeding back a basis weight by measuring a thickness of a member.

22. The method according to any one of claims 1 to 21, comprising compressing a plurality of strands consisting of a shaping material composition to form a sheet.

23. The method according to any one of claims 1 to 22, comprising obtaining a member by scraping from a lump of a shaping material composition.

24. The method according to any one of claims 1 to 23, comprising bonding the shaping material composition to a substrate.

25. The method according to claim 24, comprising shaping the shaping material composition to a desired thickness and then bonding the shaping material composition to the substrate.

26. The method according to claim 24 or 25, comprising bonding the shaping material composition substantially simultaneously to front and back sides of the substrate.

27. The method according to claim 24 or 25, comprising bonding the shaping material composition to a front side of the substrate and then also to a back side of the substrate.

28. The method according to any one of claims 24 to 27, wherein the substrate has a conductive coating on a surface in contact with the shaping material composition.

29. The method according to any one of claims 24 to 28, wherein the substrate comprises a polymer as a main component.

30. The method according to any one of claims 24 to 29, wherein the member is not cut or bored together with the substrate after the shaping material composition is bonded to the substrate.

31. The method according to any one of claims 1 to 30, wherein the member is an electrode or an insulating layer.

32. The method according to any one of claims 1 to 31, wherein the shaping operation selected from Group A is performed at least once in a state in which the shaping material composition is not in contact with a current collector foil.

33. The method according to any one of claims 1 to 31, wherein the shaping operation selected from Group A is performed at least once in a state in which the shaping material composition is not in contact with a porous separator membrane.

34. The method according to any one of claims 1 to 33, wherein a plasticizer (P-S) is water or a mixture of water and ionic liquid, and wherein the method comprises shaping the shaping material composition into a final shape for placing the member in a device and then removing moisture by a drying operation to allow the shaping material composition to become in a non-plasticized state.

35. The method according to claim 34, wherein the drying operation is performed by vacuuming or heating.

36. The method according to claim 34 or 35, wherein the drying operation is performed in a state in which the shaping material composition is not in contact with a current collector foil.

37. The method according to claim 34 or 35, wherein the drying operation is performed in a state in which the shaping material composition is not in contact with a porous separator membrane.

38. The method according to any one of claims 22 to 28, comprising removing from a substrate the shaping material composition already bonded to the substrate.

39. The method according to any one of claims 1 to 36, comprising recovering a plasticized state by performing hydration or humidification again after the shaping material composition or the shaping material composition subjected to a crosslinking operation has become in a non-plasticized state.

40. The method according to any one of claims 1 to 37, comprising manufacturing a next member again using an off-cut of a shaping material composition generated in a process of shaping the shaping material composition.

41. A method for recycling a member for an electrochemical device, comprising removing from a substrate a shaping material composition already bonded to the substrate in the method according to any one of claims 24 to 30.

42. A method for recycling a member for an electrochemical device, comprising recovering a plasticized state by performing hydration or humidification again after the shaping material composition has become a non-plasticized state in the method according to any one of claims 1 to 38.

43. A method for recycling a member for an electrochemical device, comprising manufacturing a next member again using an off-cut of a shaping material composition generated in a process of shaping the shaping material composition in the method according to any one of claims 1 to 38.

44. A method for manufacturing an electrochemical device, comprising obtaining a member by the method according to any one of claims 1 to 43.

45. The method according to claim 44, wherein the polymer (P1) is a polymer also capable of being plasticized by an electrolytic solution solvent (E-S).

46. The method according to claim 44 or 45, wherein the shaping material composition further comprises a polymer (P2) capable of being plasticized by the plasticizer (P-S) and insoluble in an electrolytic solution.

47. The method according to any one of claims 44 to 46, wherein a crosslinking agent is added in an electrolytic solution.

48. A member for an electrochemical device obtainable by the method according to any one of claims 1 to 43.

49. The member for an electrochemical device according to claim 48, wherein the member is an electrode or insulating layer.

50. An electrochemical device comprising the member for an electrochemical device according to claim 48 or 49.

51. The electrochemical device according to claim 50, comprising an electrode obtained by the method according to any one of claims 1 to 43, and a counter electrode for the electrode, wherein the counter electrode comprises at least one selected from an alkali metal, an alkaline earth metal, metallic aluminum, and silver.

52. The electrochemical device according to claim 50 or 51, wherein the electrochemical device is a water-containing electrochemical device comprising as a carrier ion at least one of an alkali metal ion, an alkaline earth metal ion, an aluminum ion, a silver ion, an organic nitrogen cation, and a halide anion.

53. The electrochemical device according to claim 50 or 51, wherein the electrochemical device is a non-aqueous electrochemical device.

54. The electrochemical device according to claim 53, wherein the electrochemical device is a non-aqueous electrochemical device that comprises as a carrier ion at least one of an alkali metal ion, an alkaline earth metal ion, an aluminum ion, a silver ion, an organic nitrogen cation, and a halide anion.
